(19) Europäisches Patentamt
European Patent Office
Office européen des brevets

(11) EP 2 886 609 A1

(12) # EUROPEAN PATENT APPLICATION

published in accordance with Art. 153(4) EPC

(43) Date of publication:
**24.06.2015 Bulletin 2015/26**

(21) Application number: **13879360.9**

(22) Date of filing: **12.08.2013**

(51) Int Cl.:
***C08L 77/06*** $^{(2006.01)}$ ***C08G 69/26*** $^{(2006.01)}$
***C08K 3/00*** $^{(2006.01)}$ ***C08K 5/29*** $^{(2006.01)}$

(86) International application number:
**PCT/JP2013/071837**

(87) International publication number:
**WO 2014/027649 (20.02.2014 Gazette 2014/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.08.2012 JP 2012179749**
**14.08.2012 JP 2012179751**

(71) Applicant: **Mitsubishi Gas Chemical Company, Inc.**
**Tokyo 100-8324 (JP)**

(72) Inventors:
- **TUNAKA, Nobuhide**
**Hiratsuka-shi**
**Kanagawa 254-0016 (JP)**
- **KATOU, Tomonori**
**Hiratsuka-shi**
**Kanagawa 254-0016 (JP)**
- **MITADERA, Jun**
**Hiratsuka-shi**
**Kanagawa 254-0016 (JP)**
- **TAKEO, Mayumi**
**Hiratsuka-shi**
**Kanagawa 254-0016 (JP)**
- **SATOU, Kazuya**
**Hiratsuka-shi**
**Kanagawa 254-0016 (JP)**

(74) Representative: **Vossius & Partner**
**Patentanwälte Rechtsanwälte mbB**
**Siebertstrasse 3**
**81675 München (DE)**

(54) **POLYETHER POLYAMIDE RESIN COMPOSITION**

(57) Provided is a polyether polyamide composition including 100 parts by mass of a polyether polyamide resin in which a diamine constituent unit thereof is derived from a specified polyether diamine compound and a xylylenediamine, and a dicarboxylic acid constituent unit thereof is derived from an $\alpha,\omega$-linear aliphatic dicarboxylic acid having from 4 to 20 carbon atoms, having blended therein from 15 to 200 parts by mass of a filler.

EP 2 886 609 A1

## Description

### TECHNICAL FIELD

The present invention relates to a polyether polyamide resin composition, and in detail, the invention relates to a polyether polyamide resin composition which is suitable for materials of automobile parts, electric parts, electronic parts, and the like.

### BACKGROUND ART

Polyamide resins are widely used as engineering plastics which are excellent in mechanical strength such as impact resistance, resistance to friction and abrasion, etc. and also excellent in heat resistance, oil resistance, and the like in the fields of automobile parts, electronic and electric instrument parts, OA instrument parts, machine parts, building and housing-related parts, and the like, and in recent years, their field of use further spreads.

As the polyamide resins, there are known a large number of kinds, for example, polyamide 6, polyamide 66, and the like; however, different from polyamide 6, polyamide 66, and the like, m-xylyleneadipamide (hereinafter also referred to as "MXD6") which is obtained from m-xylylenediamine and adipic acid has an aromatic ring in a main chain thereof and has high rigidity, a low coefficient of water absorption, and excellent oil resistance, and in molding, it has a small molding shrinkage rate and is small in a sink mark or warp, and therefore, the m-xylyleneadipamide is also suitable for precision molding and is positioned as an extremely excellent polyamide resin. From these facts, in recent years, MXD6 is being utilized widely more and more as a molding material, in particular, an injection molding material in various fields including transporter parts for automobiles, etc., general machine parts, precision machine parts, electronic and electric instrument parts, recreational sport equipment, members for civil engineering and construction, and the like.

However, as compared with other polyamide such as polyamide 66, etc., although MXD6 has large rigidity and strength, it is brittle against an impact exceeding the former, and hence, various investigations regarding MXD6 are made (for example, see Patent Document 1).

In addition, stronger polyamide resin materials are demanded, too. As a m-xylylene-based polyamide resin that is stronger in strength than MXD6, there is xylyleneadipamide (hereinafter also referred to as "MP6") which is obtained from a mixed diamine of m-xylylenediamine and p-xylylenediamine. However, similar to MXD6, MP6 is brittle against a strong impact, and in all of them, an improvement in toughness was demanded.

### CITATION LIST

### PATENT LITERATURE

Patent Document 1: JP-A-51-63860

### SUMMARY OF INVENTION

### TECHNICAL PROBLEM

An object of the present invention is to solve the above-describe technical problem and to provide a polyether polyamide resin composition which is higher in strength and higher in toughness than existing polyamide resins and which is capable of forming a molded article having excellent crystallization and further having excellent mechanical physical properties such as impact resistance, etc. as well as a molded article thereof.

### SOLUTION TO PROBLEM

The present invention provides the following polyether polyamide resin composition and molded article.

<1> A polyether polyamide resin composition comprising 100 parts by mass of a polyether polyamide resin (A1) in which a diamine constituent unit thereof is derived from a polyether diamine compound (a1-1) represented by the following general formula (1) and a xylylenediamine (a-2), and a dicarboxylic acid constituent unit thereof is derived from an $\alpha,\omega$-linear aliphatic dicarboxylic acid having from 4 to 20 carbon atoms, having blended therein from 15 to 200 parts by mass of a filler (B):

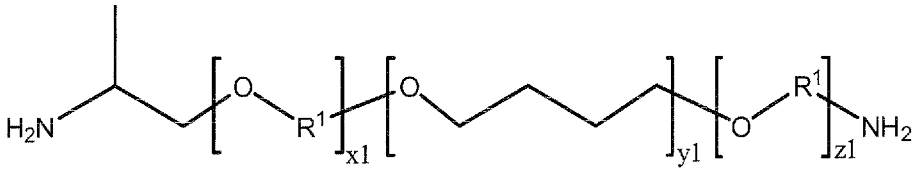

(1)

wherein (x1 + z1) is from 1 to 30; y1 is from 1 to 50; and $R^1$ represents a propylene group.
<2> A molded article comprising the polyether polyamide resin composition as set forth above in <1>.
<3> A polyether polyamide resin composition comprising 100 parts by mass of a polyether polyamide resin (A2) in which a diamine constituent unit thereof is derived from a polyether diamine compound (a2-1) represented by the following general formula (2) and a xylylenediamine (a-2), and a dicarboxylic acid constituent unit thereof is derived from an α,ω-linear aliphatic dicarboxylic acid having from 4 to 20 carbon atoms, having blended therein from 15 to 200 parts by mass of a filler (B):

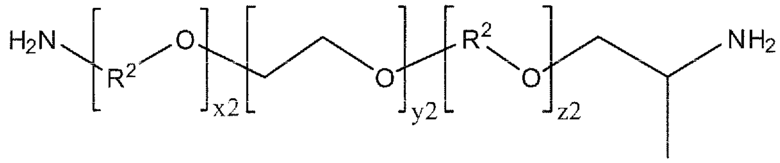

(2)

wherein (x2 + z2) is from 1 to 60; y2 is from 1 to 50; and $R^2$ represents a propylene group.
<4> A molded article comprising the polyether polyamide resin composition as set forth above in <3>.

ADVANTAGEOUS EFFECTS OF INVENTION

In view of the fact that the polyether polyamide resin composition of the present invention is more excellent in terms of impact strength and tensile modulus than existing polyamide resin (MXD6 or MP6) materials, it is a xylylene-based polyamide resin-based composition having strong strength and high toughness and is suitable especially for an injection molding material.

In addition, the molded article obtained from the polyether polyamide resin compositions of the present invention is also sufficient in a degree of crystallization and excellent in mechanical physical properties such as impact resistance, etc.

DESCRIPTION OF EMBODIMENTS

[Polyether polyamide resin composition]

As a first invention, the polyether polyamide resin composition of the present invention comprises 100 parts by mass of a polyether polyamide resin (A1) in which a diamine constituent unit thereof is derived from a polyether diamine compound (a1-1) represented by the following general formula (1) and a xylylenediamine (a-2), and a dicarboxylic acid constituent unit thereof is derived from an α,ω-linear aliphatic dicarboxylic acid having from 4 to 20 carbon atoms, having blended therein from 15 to 200 parts by mass of a filler (B):

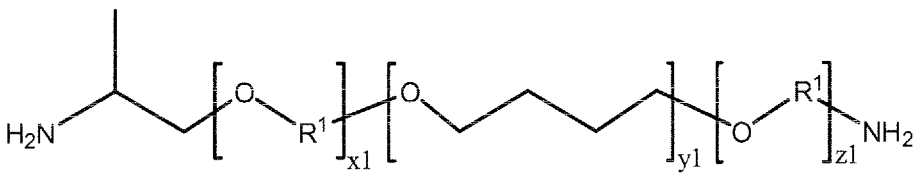

(1)

wherein (x1 z1) is from 1 to 30; y1 is from 1 to 50; and $R^1$ represents a propylene group.

As a second invention, the polyether polyamide resin composition of the present invention comprises 100 parts by mass of a polyether polyamide resin (A2) in which a diamine constituent unit thereof is derived from a polyether diamine compound (a2-1) represented by the following general formula (2) and a xylylenediamine (a-2), and a dicarboxylic acid constituent unit thereof is derived from an α,ω-linear aliphatic dicarboxylic acid having from 4 to 20 carbon atoms, having blended therein from 15 to 200 parts by mass of a filler (B):

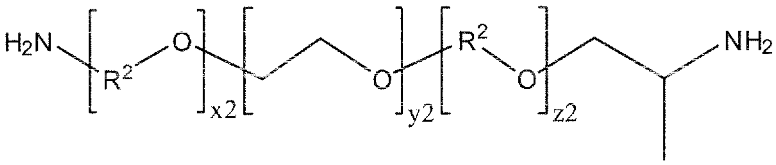

(2)

wherein (x2 + z2) is from 1 to 60; y2 is from 1 to 50; and $R^2$ represents a propylene group.

<Polyether polyamide resins (A1) and (A2)>

The polyether polyamide resin (A1) is one in which a diamine constituent unit thereof is derived from a polyether diamine compound (a1-1) represented by the foregoing general formula (1) and a xylylenediamine (a-2), and a dicarboxylic acid constituent unit thereof is derived from an α,ω-linear aliphatic dicarboxylic acid having from 4 to 20 carbon atoms. In addition, the polyether polyamide resin (A2) is one in which a diamine constituent unit thereof is derived from a polyether diamine compound (a2-1) represented by the foregoing general formula (2) and a xylylenediamine (a-2), and a dicarboxylic acid constituent unit thereof is derived from an α,ω-linear aliphatic dicarboxylic acid having from 4 to 20 carbon atoms. By using the polyether polyamide resin (A1) or (A2), it is possible to produce a polyether polyamide resin composition having excellent mechanical properties such as flexibility, tensile elongation at break, etc.

By adding the polyether diamine compounds (a1-1) and (a2-1) to the polyether polyamide resins (A1) and (A2) as a diamine constituent unit thereof, respectively, the elastic modulus, rate of elongation, and impact resistance of the polyether polyamide resins (A1) and (A2) can be enhanced.

In addition, when the diamine constituent unit and the dicarboxylic acid constituent unit have the above-described constitutions, respectively, the coefficient of water absorption of each of the polyether polyamide resins (A1) and (A2) and the finally obtained polyether polyamide resin compositions can be optimized, and furthermore, the molding processability such as mold release properties, etc. can be enhanced. In addition, even by making the molded article thin, physical properties such as elastic modulus, etc. can be kept, and hence, it is also possible to contemplate to reduce the weight of the molded article.

(Diamine constituent unit)

The diamine constituent unit that constitutes the polyether polyamide resin (A1) is derived from a polyether diamine compound (a1-1) represented by the foregoing general formula (1) and a xylylenediamine (a-2). In addition, the diamine constituent unit that constitutes the polyether polyamide resin (A2) is derived from a polyether diamine compound (a2-1) represented by the foregoing general formula (2) and a xylylenediamine (a-2).

(Polyether diamine compound (a1-1))

The diamine constituent unit that constitutes the polyether polyamide resin (A1) contains a constituent unit derived from a polyether diamine compound (a1-1) represented by the foregoing general formula (1). In the foregoing general formula (1), (x1 + z1) is from 1 to 30, preferably from 2 to 25, more preferably from 2 to 20, and still more preferably from 2 to 15. In addition, y1 is from 1 to 50, preferably from 1 to 40, more preferably from 1 to 30, and still more preferably from 1 to 20. In the case where the values of x1, y1, and z1 are larger than the foregoing ranges, the compatibility with an oligomer or polymer composed of a xylylenediamine and a dicarboxylic acid, which is formed on the way of a reaction of melt polymerization, becomes low, so that the polymerization reaction proceeds hardly.

In addition, in the foregoing general formula (1), all of $R^1$s represent a propylene group. A structure of the oxypropylene group represented by $-OR^1-$ may be any of $-OCH_2CH_2CH_2-$, $-OCH(CH_3)CH_2-$, and $-OCH_2CH(CH_3)-$.

A number average molecular weight of the polyether diamine compound (a1-1) is preferably from 204 to 5,000, more preferably from 250 to 4,000, still more preferably from 300 to 3,000, especially preferably from 400 to 2,000, and most preferably from 500 to 1,800. So long as the number average molecular weight of the polyether diamine compound falls within the foregoing range, a polymer that reveals functions as an elastomer, such as flexibility, rubber elasticity, etc., can be obtained.

(Polyether diamine compound (a2-1))

The diamine constituent unit that constitutes the polyether polyamide resin (A2) contains a constituent unit derived from a polyether diamine compound (a2-1) represented by the foregoing general formula (2). In the foregoing general formula (2), (x2 + z2) is from 1 to 60, preferably from 2 to 40, more preferably from 2 to 30, and still more

preferably from 2 to 20. In addition, y2 is from 1 to 50, preferably from 1 to 40, more preferably from 1 to 30, and still more preferably from 1 to 20. In the case where the values of x2, y2, and z2 are larger than the foregoing ranges, the compatibility with an oligomer or polymer, composed of a xylylenediamine and a dicarboxylic acid, which is formed on the way of a reaction of melt polymerization, becomes low, so that the polymerization reaction proceeds hardly.

In addition, in the foregoing general formula (2), all of $R^2$s represent a propylene group. A structure of the oxypropylene group represented by $-OR^2-$ may be any of $-OCH_2CH_2CH_2-$, $-OCH(CH_3)CH_2-$, and $-OCH_2CH(CH_3)-$.

A number average molecular weight of the polyether diamine compound (a2-1) is preferably from 180 to 5,700, more preferably from 200 to 4,000, still more preferably from 300 to 3,000, yet still more preferably from 400 to 2,000, and even yet still more preferably 500 to 1,800. So long as the number average molecular weight of the polyether diamine compound falls within the foregoing range, a polymer that reveals functions as an elastomer, such as flexibility, rubber elasticity, etc., can be obtained.

(Xylylenediamine (a-2))

The diamine constituent unit that constitutes the polyether polyamide resin (A1) or (A2) contains a constituent unit derived from a xylylenediamine (a-2). The xylylenediamine (a-2) is preferably m-xylylenediamine, p-xylylenediamine, or a mixture thereof, and more preferably m-xylylenediamine or a mixture ofm-xylylenediamine and p-xylylenediamine.

In the case where the xylylenediamine (a-2) is derived from m-xylylenediamine, the resulting polyether polyamide resin is excellent in terms of flexibility, crystallinity, melt moldability, molding processability, and toughness.

In the case where the xylylenediamine (a-2) is derived from a mixture of m-xylylenediamine and p-xylylenediamine, the resulting polyether polyamide resin is excellent in terms of flexibility, crystallinity, melt moldability, molding processability, and toughness and furthermore, exhibits high heat resistance and high elastic modulus.

In the case where a mixture of m-xylylenediamine and p-xylylenediamine is used as the xylylenediamine (a-2), a proportion of the p-xylylenediamine relative to a total amount of m-xylylenediamine and p-xylylenediamine is preferably 90% by mole or less, more preferably from 1 to 80% by mole, and still more preferably from 5 to 70% by mole. That is, a molar ratio of m-xylylenediamine and p-xylylenediamine (MXDA/PXDA) is preferably from 100/0 to 10/90, more preferably from 99/1 to 20/80, and still more preferably from 95/5 to 30/70. So long as the proportion of p-xylylenediamine falls within the foregoing range, a melting point of the resulting polyether polyamide resin is not close to a decomposition temperature of the polyether polyamide resin, and hence, such is preferable.

A proportion of the constituent unit derived from the polyether diamine compound (a1-1) or (a2-1) in the diamine constituent unit, namely a proportion of the polyether diamine compound (a1-1) or (a2-1) relative to a total amount of the polyether diamine compound (a1-1) or (a2-1) and the xylylene diamine (a-2), both of which constitute the diamine constituent unit, is preferably from 0.1 to 50% by mole, more preferably from 0.5 to 40% by mole, still more preferably from 1 to 35% by mole, and especially preferably from 5 to 30% by mole.

When the proportion of the constituent unit derived from the polyether diamine compound (a1-1) or (a2-1) in the diamine constituent unit is less than 50% by mole, the appearance of the molded article is favorable, and so long as it falls within the foregoing range, the resulting polyether polyamide resin is excellent in melt moldability and furthermore, is excellent in mechanical physical properties such as impact strength, tensile modulus, etc.

As described previously, though the diamine constituent unit that constitutes the polyether polyamide resin (A1) or (A2) is derived from the polyether diamine compound (a1-1) represented by the foregoing general formula (1) and the xylylenediamine (a-2), or the polyether diamine compound (a2-1) represented by the foregoing general formula (2) and the xylylenediamine (a-2), so long as the effects of the present invention are not hindered, a constituent unit derived from other diamine compound may be contained.

As the diamine compound which may constitute a diamine constituent unit other than the polyether diamine compound (a1-1) and the xylylenediamine (a-2), and the polyether diamine compound (a2-1) and the xylylenediamine (a-2), though there can be exemplified aliphatic diamines such as tetramethylenediamine, pentamethylenediamine, 2-methylpentanediamine, hexamethylenediamine, heptamethyl enediamine, octamethylenediamine, nonamethylenediamine, decamethylenediamine, dodecamethylenediamine, 2,2,4-trimethylhexamethylenediamine, 2,4,4-trimethylhexamethylenediamine, etc.; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, bis(aminomethyl)tricyclodecane, etc.; diamines having an aromatic ring, such as bis(4-aminophenyl) ether, p-phenylenediamine, bis(aminomethyl)naphthalene, etc.; and the like, the diamine compound is not limited to these compounds.

(Dicarboxylic acid constituent unit)

The dicarboxylic acid constituent unit that constitutes the polyether polyamide resin (A1) or (A2) is derived from an $\alpha,\omega$-linear aliphatic dicarboxylic acid having from 4 to 20 carbon atoms. As the $\alpha,\omega$-linear aliphatic dicarboxylic acid

having from 4 to 20 carbon atoms, though there can be exemplified succinic acid, glutaric acid, adipic acid, pimelic acid, suberic acid, azelaic acid, sebacic acid, 1,10-decanedicarboxylic acid, 1,11-undecanedicarboxylic acid, 1,12-dodecanedicarboxylic acid, and the like, at least one member selected from adipic acid and sebacic acid is preferably used from the viewpoints of crystallinity and high elasticity. These dicarboxylic acids may be used solely or in combination of two or more kinds thereof.

In the case of using an α,ω-linear aliphatic dicarboxylic acid having from 4 to 20 carbon atoms other than sebacic acid and adipic acid, its use amount is preferably less than 50% by mole, and more preferably 40% by mole or less in the dicarboxylic acid constituent unit.

As described previously, though the dicarboxylic acid constituent unit that constitutes the polyether polyamide resin (A1) or (A2) is derived from the α,ω-linear aliphatic dicarboxylic acid having from 4 to 20 carbon atoms, so long as the effects of the present invention are not hindered, a constituent unit derived from other dicarboxylic acid may be contained.

As the dicarboxylic acid which may constitute the dicarboxylic acid constituent unit other than the α,ω-linear aliphatic dicarboxylic acid having from 4 to 20 carbon atoms, there can be exemplified aliphatic dicarboxylic acids such as oxalic acid, malonic acid, etc.; aromatic dicarboxylic acids such as terephthalic acid, isophthalic acid, 2,6-naphthalenedicarboxylic acid, etc.; and the like, and these can be used in combination.

In the case where a mixture of an α,ω-linear aliphatic dicarboxylic acid having from 4 to 20 carbon atoms and isophthalic acid is used as the dicarboxylic acid component, the molding processability of the polyether polyamide resin (A1) or (A2) is enhanced, and in view of the fact that a glass transition temperature increases, the heat resistance can also be enhanced. A molar ratio of the α,ω-linear aliphatic dicarboxylic acid having from 4 to 20 carbon atoms and isophthalic acid ((α,ω-linear aliphatic dicarboxylic acid having from 4 to 20 carbon atoms)/(isophthalic acid)) is preferably from 50/50 to 99/1, and more preferably from 70/30 to 95/5.

Furthermore, besides the diamine constituent unit and the dicarboxylic acid constituent unit, as the unit that constitutes the polyether polyamide resin (A), a lactam such as ε-caprolactam, laurolactam, etc., or an aliphatic aminocarboxylic acid such as aminocaproic acid, aminoundecanoic acid, etc. can also be used as a copolymerization unit within the range where the effects of the present invention are not hindered.

(Production of polyether polyamide resins (A1) and (A2))

A production method of the polyether polyamide resin (A1) or (A2) is not particularly limited but can be performed by a conventionally known method under a conventionally known polymerization condition. In addition, a small amount of a monoamine or a monocarboxylic acid may be added as a molecular weight modifier at the time of polycondensation.

The polycondensation method in a molten state is not particularly limited but can be performed by an arbitrary method under an arbitrary polymerization condition.

The polyether polyamide resin (A1) or (A2) can be, for example, produced by a method in which a salt composed of the diamine component (the diamine including the polyether diamine compound (a1-1) and the xylylenediamine (a-2), and the like, or the diamine including the polyether diamine compound (a2-1) and the xylylenediamine (a-2), and the like) and the dicarboxylic acid component (the dicarboxylic acid including the α,ω-linear aliphatic dicarboxylic acid having from 4 to 20 carbon atoms and the like) is subjected to temperature rise in a pressurized state in the presence of water, and polymerization is performed in a molten state while removing the added water and condensed water.

In addition, the polyether polyamide resin (A1) or (A2) can also be produced by a method in which the diamine component (the diamine including the polyether diamine compound (a1-1) and the xylylenediamine (a-2), and the like, or the diamine including the polyether diamine compound (a2-1) and the xylylenediamine (a-2), and the like) is added directly to the dicarboxylic acid component (the dicarboxylic acid including the α,ω-linear aliphatic dicarboxylic acid having from 4 to 20 carbon atoms and the like) in a molten state, and polycondensation is performed under atmospheric pressure. In that case, in order to keep the reaction system in a uniform liquid state, the diamine component is continuously added to the dicarboxylic acid component, and during this period, the polycondensation is advanced while subjecting the reaction system to temperature rise such that the reaction temperature does not fall below the melting point of the formed oligoamide or polyamide.

A molar ratio of the diamine component (the diamine including the polyether diamine compound (a1-1) and the xylylenediamine (a-2), and the like, or the diamine including the polyether diamine compound (a2-1) and the xylylenediamine (a-2), and the like) and the dicarboxylic acid component (the dicarboxylic acid including the α,ω-linear aliphatic dicarboxylic acid having from 4 to 20 carbon atoms and the like) ((diamine component)/(dicarboxylic acid component)) is preferably in the range of from 0.9 to 1.1, more preferably in the range of from 0.93 to 1.07, still more preferably in the range of from 0.95 to 1.05, and yet still more preferably in the range of from 0.97 to 1.02. When the molar ratio falls within the foregoing range, an increase of the molecular weight is easily advanced.

A polymerization temperature is preferably from 150 to 300°C, more preferably from 160 to 280°C, and still more preferably from 170 to 270°C. So long as the polymerization temperature falls within the foregoing temperature

range, the polymerization reaction is rapidly advanced. In addition, since the monomers or the oligomer or polymer, etc. on the way of the polymerization hardly causes thermal decomposition, properties of the resulting polymer become favorable.

A polymerization time is generally from 1 to 5 hours after starting to add dropwise the diamine component. By allowing the polymerization time to fall within the foregoing range, the molecular weight of the polyether polyamide resin (A1) or (A2) can be sufficiently increased, and furthermore, coloration of the resulting polymer can be suppressed.

In addition, the polyether polyamide resin (A1) or (A2) may also be produced by previously charging the polyether diamine compound (a1-1) or (a2-1) as the diamine component in a reaction tank together with the dicarboxylic acid component and heating them to form a molten mixture [Step (1)]; and adding to the resulting molten mixture the diamine component other than the above-described polyether diamine compound (a1-1) or (a2-1), including the xylylenediamine (a-2) and the like [Step (2)].

Here, while the above-described [Step (1)] and [Step (2)] are described, in the description, each of the polyether polyamide resins (A1) and (A2) may be sometimes referred to as "polyether polyamide resin (A)", and each of the polyether diamine compounds (a1-1) and (a2-1) may be sometimes referred to as "polyether diamine compound (a-1)".

[Step (1)]

Step (1) is a step of mixing the above-described polyether diamine compound (a-1) and the above-described $\alpha,\omega$-linear aliphatic dicarboxylic acid compound and heating them to form a molten mixture.

By going through Step (1), the resulting polyether polyamide resin is less in odor and coloration, and a resin having a more excellent rate of tensile elongation at break can be formed. It may be presumed that this is caused due to the fact that by going through Step (1), the polyether diamine compound (a-1) and the $\alpha,\omega$-linear aliphatic dicarboxylic acid compound are uniformly melted and mixed, and therefore, in a synthesis process of a polyether polyamide resin, before the temperature in the reaction vessel reaches a temperature at which the decomposition of the polyether diamine compound (a-1) proceeds, the polyether diamine compound (a-1) is (poly)condensed with the $\alpha,\omega$-linear aliphatic dicarboxylic acid compound and stabilized. That is, it may be considered that by going through Step (1), in the synthesis process of a polyether polyamide resin, deterioration of the polyether diamine compound (a-1) by thermal history or the like is prevented and efficiently incorporated into the polyether polyamide resin, and as a result, a decomposition product derived from the polyether diamine compound (a-1) is hardly formed.

It is possible to perform evaluation on what degree is stabilized of the polyether diamine compound (a-1) in the reaction system, by determining an incorporation rate. The incorporation rate is also dependent upon the kind of the $\alpha,\omega$-linear aliphatic dicarboxylic acid compound, and the more increased the carbon number of the straight chain of the $\alpha,\omega$-linear aliphatic dicarboxylic acid compound, the higher the incorporation rate of the polyether diamine compound (a-1) is; however, by going through Step (1), the incorporation rate becomes higher.

The incorporation rate of the above-described polyether diamine compound (a-1) can be determined by the following method.

(1) 0.2 g of the resulting polyether Polyamide resin (A) is dissolved in 2 mL of hexafluoroisopropanol (HFIP).
(2) The solution obtained in (1) is added dropwise to 100 mL of methanol to perform reprecipitation.
(3) A reprecipitate obtained in (2) is filtered with a membrane filter having an opening of 10 $\mu$m.
(4) A residue on the filter as obtained in (3) is dissolved in heavy HFIP (manufactured by Sigma-Aldrich) and analyzed by means of $^1$H-NMR (AV400M, manufactured by Bruker BioSpin K.K.), and a copolymerization rate (a) between the polyether diamine compound (a-1) and the xylylenediamine (a-2) of the residue on the filter is calculated. The copolymerization ratio is calculated from a ratio of a spectral peak area assigned to the xylylenediamine (a-2) and a spectral peak area assigned to the polyether diamine compound (a-1).
(5) The incorporation rate of the polyether diamine compound (a-1) is calculated according to the following equation.

$$\text{Incorporation rate of polyester diamine compound (a-1)} = a/b \times 100\ (\%)$$

a: Copolymerization ratio of the constituent unit derived from the polyether diamine compound (a-1) of the residue on the filter relative to all of the diamine constituent units, as calculated in (4)
b: Copolymerization ratio of the constituent unit derived from the polyether diamine compound (a-1) relative to all of the diamine constituent units, as calculated from the charge amount at the time of polymerization,

First of all, in Step (1), the polyether diamine compound (a-1) and the $\alpha,\omega$-linear aliphatic dicarboxylic acid compound are previously charged in a reaction vessel, and the polyether diamine compound (a-1) in a molten state and

the $\alpha,\omega$-linear aliphatic dicarboxylic acid compound in a molten state are mixed. In order to render both the polyether diamine compound (a-1) and the $\alpha,\omega$-linear aliphatic dicarboxylic acid compound in a molten state,

(i) The solid $\alpha,\omega$-linear aliphatic dicarboxylic acid compound and the liquid or solid polyether diamine compound (a-1) may be charged in a reaction vessel and then melted by heating to the melting point of the $\alpha,\omega$-linear aliphatic dicarboxylic acid compound or higher;
(ii) The melted $\alpha,\omega$-linear aliphatic dicarboxylic acid compound may be charged in a reaction vessel having the liquid or solid polyether diamine compound (a-1) charged therein;
(iii) The liquid or solid polyether diamine compound (a-1) may be charged in a reaction vessel having the $\alpha,\omega$-linear aliphatic dicarboxylic acid compound in a molten state charged therein; or
(iv) A mixture prepared by previously mixing the melted polyether diamine compound (a-1) and the melted $\alpha,\omega$-linear aliphatic dicarboxylic acid compound may be charged in a reaction vessel.

In the foregoing (i) to (iv), on the occasion of charging the polyether diamine compound (a-1) and/or the $\alpha,\omega$-linear aliphatic dicarboxylic acid compound in a reaction vessel, the compound or compounds may be dissolved or dispersed in an appropriate solvent. On that occasion, examples of the solvent include water and the like.
In addition, from the viewpoint of producing a polyether polyamide resin with less coloration, in charging the polyether diamine compound (a-1) and the $\alpha,\omega$-linear aliphatic dicarboxylic acid compound in a reaction vessel, it is preferable to thoroughly purge the inside of the reaction vessel with an inert gas.
In the case of the foregoing (i), it is preferable to purge the inside of the reaction vessel with an inert gas before melting; in the case of the foregoing (ii) or (iii), it is preferable to purge the inside of the reaction vessel with an inert gas before charging the melted $\alpha,\omega$-linear aliphatic dicarboxylic acid compound; and in the case of the foregoing (iv), it is preferable to purge the inside of the reaction vessel with an inert gas before charging the above-described mixture.
Subsequently, in Step (1), the above-described mixture of the polyether diamine compound (a-1) in a molten state and the $\alpha,\omega$-linear aliphatic dicarboxylic acid compound in a molten state is heated.
A heating temperature on the occasion of heating the above-described mixture is preferably the melting point of the $\alpha,\omega$-linear aliphatic dicarboxylic acid compound or higher; more preferably in the range of from the melting point of the $\alpha,\omega$-linear aliphatic dicarboxylic acid compound to (the melting point + 40°C); and still more preferably in the range of from the melting point of the $\alpha,\omega$-linear aliphatic dicarboxylic acid compound to (the melting point + 30°C).
In addition, the heating temperature at a point of time of finish of Step (1) is preferably from the melting point of the $\alpha,\omega$-linear aliphatic dicarboxylic acid compound to (the melting point + 50°C). When the heating temperature is the melting point of the $\alpha,\omega$-linear aliphatic dicarboxylic acid compound or higher, the mixed state of the polyether diamine compound (a-1) and the $\alpha,\omega$-linear aliphatic dicarboxylic acid compound becomes uniform, so that the effects of the present invention can be sufficiently revealed. In addition, when the heating temperature is not higher than (the melting point of the $\alpha,\omega$-linear aliphatic dicarboxylic acid compound + 50°C), there is no concern that the thermal decomposition of the polyether diamine compound (a-1) and the $\alpha,\omega$-linear aliphatic dicarboxylic acid compound proceeds.
Incidentally, the melting point of the $\alpha,\omega$-linear aliphatic dicarboxylic acid compound can be measured by means of differential scanning calorimetry (DSC) or the like.
A heating time in Step (1) is generally from about 15 to 120 minutes. By allowing the heating time to fall within the foregoing range, the mixed state of the polyether diamine compound (a-1) and the $\alpha,\omega$-linear aliphatic dicarboxylic acid compound can be made thoroughly uniform, and there is no concern that the thermal decomposition proceeds.
In Step (1), the molten mixture in which the polyether diamine compound (a-1) in a molten state and the $\alpha,\omega$-linear aliphatic dicarboxylic acid compound in a molten state are uniformly mixed as described above is obtained. In addition, meanwhile, in Step (1), it is preferable that from 30 to 100% by mole of an amino group in the whole of the charged polyether diamine compound (a-1) is (poly)condensed with the $\alpha,\omega$-linear aliphatic dicarboxylic acid compound to form an oligomer or polymer. From this fact, the above-described molten mixture obtained in Step (1) may further contain the above-described melted oligomer or polymer.
In Step (1), a degree of (poly)condensation between the polyether diamine compound (a-1) and the $\alpha,\omega$-linear aliphatic dicarboxylic acid compound as described above varies with a combination of the polyether diamine compound (a-1) and the $\alpha,\omega$-linear aliphatic dicarboxylic acid compound, a mixing ratio thereof, a temperature of the reaction vessel on the occasion of mixing, or a mixing time; however, before Step (2) of adding the diamine component other than the polyether diamine compound (a-1), it is preferable that 30% by mole or more of the amino group of the whole of the charged polyether diamine compound (a-1) is (poly)condensed with the $\alpha,\omega$-linear aliphatic dicarboxylic acid compound, it is more preferable that 50% by mole or more of the amino group of the whole of the charged polyether diamine compound (a-1) is (poly)condensed with the $\alpha,\omega$-linear aliphatic dicarboxylic acid compound, and it is still more preferable that 70% by mole or more of the amino group of the whole of the charged polyether diamine compound (a-1) is (poly)condensed with the $\alpha,\omega$-linear aliphatic dicarboxylic acid compound.
A rate of reaction of the amino group of the whole of the polyether diamine compound can be calculated

according to the following equation.

$$\text{Rate of reaction of amino group} = (1 - [NH_2 \text{ in Step (1)}]/[NH_2 \text{ in (a-1)}]) \times 100$$

$[NH_2$ in (a-1)]: Terminal amino group concentration calculated on the occasion of assuming that the whole of the polyether diamine compound (a-1) and the α,ω-linear aliphatic dicarboxylic acid compound as charged are in an unreacted state
$[NH_2$ in Step (1)]: Terminal amino group concentration of the mixture in Step (1)

In addition, in Step (1), on the occasion of charging the polyether diamine compound (a-1) and the α,ω-linear aliphatic dicarboxylic acid compound in the reaction vessel, a phosphorus atom-containing compound and an alkali metal compound as described later may be added.

[Step (2)]

Step (2) is a step of adding a diamine component other than the above-described polyether diamine compound (a-1), including the xylylene diamine (a-2) and the like (hereinafter sometimes abbreviated as "xylylenediamine (a-2), etc.") to the molten mixture obtained in Step (1).

In Step (2), a temperature in the reaction vessel on the occasion of adding the xylylenediamine (a-2), etc. is preferably a temperature of the melting point of the formed polyether amide oligomer or higher and up to (the melting point + 30°C). When the temperature in the reaction vessel on the occasion of adding the xylylenediamine (a-2), etc. is a temperature of the melting point of the polyether amide oligomer composed of the molten mixture of the polyether diamine compound (a-1) and the α,ω-linear aliphatic dicarboxylic acid compound and the xylylenediamine (a-2), etc. or higher and up to (the melting point + 30°C), there is no possibility that the reaction mixture is solidified in the reaction vessel, and there is less possibility that the reaction mixture is deteriorated, and hence, such is preferable.

Though the above-described addition method is not particularly limited, it is preferable to continuously add dropwise the xylylenediamine (a-2), etc. while controlling the temperature in the reaction vessel within the foregoing temperature range, and it is more preferable to continuously raise the temperature in the reaction vessel with an increase of the amount of dropwise addition of the xylylenediamine (a-2), etc.

In addition, it is preferable that at a point of time of completion of addition of the whole amount of the diamine component including the xylylenediamine (a-2), etc., the temperature in the reaction vessel is from the melting point of the produced polyether polyamide resin to (the melting point + 30°C). When at a point of time of completion of addition of the xylylenediamine (a-2), etc., the temperature in the reaction vessel is a temperature of the melting point of the resulting polyether polyamide resin (A) or higher and up to (the melting point + 30°C), there is no possibility that the reaction mixture is solidified in the reaction vessel, and there is less possibility that the reaction mixture is deteriorated, and hence, such is preferable.

Incidentally, the melting point of the polyether amide oligomer or polyether polyamide resin (A) as referred to herein can be confirmed by means of DSC or the like with respect to a material obtained by previously mixing the polyether diamine compound (a-1), the xylylenediamine (a-2), etc., and the dicarboxylic acid compound in a prescribed molar ratio and melting and mixing them in a nitrogen gas stream for at least about one hour under a heating condition to such an extent that the mixture is melted.

During this period, it is preferable that the inside of the reaction vessel is purged with nitrogen. In addition, during this period, it is preferable that the system in the reaction vessel is mixed using a stirring blade, thereby rendering the inside of the reaction vessel in a uniform fluidized state.

An addition rate of the xylylenediamine (a-2), etc. is chosen in such a manner that the reaction system is held in a uniform molten state while taking into consideration heat of formation of an amidation reaction, a quantity of heat to be consumed for distillation of condensation formed water, a quantity of heat to be fed into the reaction mixture from a heating medium through a reaction vessel wall, a structure of a portion at which the condensation formed water and the raw material compounds are separated from each other, and the like.

Though a time required for addition of the xylylenediamine (a-2), etc. varies with a scale of the reaction vessel, it is generally in the range of from 0.5 to 5 hours, and more preferably in the range of from 1 to 3 hours. When the time falls within the foregoing range, not only the solidification of the polyether amide oligomer and the polyether polyamide resin (A) formed in the reaction vessel can be suppressed, but the coloration due to thermal history of the reaction system can be suppressed.

During addition of the xylylenediamine (a-2), etc., condensed water formed with the progress of reaction is distilled outside the reaction system. Incidentally, the raw materials such as the scattered diamine compound and dicarboxylic acid compound, etc. are separated from condensed water and returned into the reaction vessel; and in this respect, it is possible to control an amount thereof, and the amount can be controlled by, for example, controlling a

temperature of a reflux column to an optimum range or controlling a filler of a packing column, such as so-called Raschig ring, Lessing ring, saddle, etc. to appropriate shape and filling amount. For separation of the raw materials from condensed water, a partial condenser is suitable, and it is preferable to distill off condensed water through a total condenser.

In the above-described Step (2), a pressure in the inside of the reaction vessel is preferably from 0.1 to 0.6 MPa, and more preferably from 0.15 to 0.5 MPa. When the pressure in the inside of the reaction vessel is 0.1 MPa or more, scattering of the unreacted xylylenediamine (a-2), etc. and dicarboxylic acid compound outside the system together with condensed water can be suppressed. For the purpose of preventing scattering of the unreacted xylylenediamine (a-2), etc. and dicarboxylic acid compound outside the system, the scattering can be suppressed by increasing the pressure in the inside of the reaction vessel; however, it can be thoroughly suppressed at a pressure of 0.6 MPa or less. When the pressure in the reaction vessel is more than 0.6 MPa, more energy is required for distilling condensed water outside the reaction system because there is a concern that the boiling point of the condense water becomes high, so that it may be necessary to allow a high-temperature heating medium to pass by a partial condenser, and hence, such is not preferable.

In the case of applying a pressure, it may be performed by using an inert gas such as nitrogen, etc., or it may be performed by using a steam of condensed water formed during the reaction. In the case where the pressure has been applied, after completion of addition of the xylylenediamine (a-2), etc., the pressure is reduced until it reaches atmospheric pressure.

[Step (3)]

After completion of Step (2), though the polycondensation reaction may be finished, Step (3) of further continuing the polycondensation reaction may be performed at atmospheric pressure or negative pressure for a fixed period of time.

In the case of further continuing the polycondensation reaction at negative pressure, it is preferable to perform pressure reduction such that the pressure of the reaction system is finally 0.08 MPa or less. Though the time of from completion of addition of the xylylenediamine (a-2), etc. to start of the pressure reduction is not particularly limited, it is preferable to start the pressure reduction within 30 minutes after completion of addition. As for a pressure reduction rate, a rate such that the unreacted xylylenediamine (a-2), etc. is not distilled outside the system together with water during the pressure reduction is chosen, and for example, it is chosen from the range of from 0.1 to 1 MPa/hr. When the pressure reduction rate is made slow, not only a time required for the production increases, but a lot of time is required for the pressure reduction, so that there is a concern that heat deterioration of the resulting polyether polyamide resin (A) is caused; and hence, such is not preferable.

A temperature of the reaction vessel in Step (3) is preferably a temperature at which the resulting polyether polyamide resin (A) is not solidified, namely a temperature in the range of from the melting point of the resulting polyether polyamide resin (A) to (the melting point + 30°C). Incidentally, the melting point of the polyether polyamide resin as referred to herein can be confirmed by means of DSC or the like.

A polycondensation reaction time in Step (3) is generally 120 minutes or less. When the polymerization time is allowed to fall within the foregoing range, the molecular weight of the polyether polyamide resin (A) can be sufficiently increased, and furthermore, coloration of the resulting polymer can be suppressed.

After completion of the polycondensation reaction, a method of taking out the polyether polyamide resin (A) from the reaction vessel is not particularly limited, and a known technique can be adopted; however, from the viewpoints of productivity and sequent handling properties, a technique in which while extracting a strand through a strand die heated at a temperature of from the melting point of the polyether polyamide resin (A) to (the melting point + 50°C), the strand of the molten resin is cooled in a water tank and then cut by a pelletizer to obtain pellets, or so-called hot cutting or underwater cutting, or the like is preferable. On that occasion, for the purpose of increasing or stabilizing a discharge rate of the polyether polyamide resin (A) from the strand die, or the like, the inside of the reaction vessel may be pressurized. In the case of pressurization, in order to suppress deterioration of the polyether polyamide resin (A), it is preferable to use an inert gas.

In the production of the polyether polyamide resin (A1) or (A2), a polymerization condition is not particularly limited; however, by properly choosing a charge ratio of the raw material diamine component and dicarboxylic acid component, a polymerization catalyst, and a molecular weight modifier, making a polymerization temperature low, and shortening a polymerization time, the polyether polyamide resin (A1) or (A2) in which the above-described properties, particularly thermal properties are controlled can be produced.

In addition, in the case where it is further necessary to increase the molecular weight of the polyether polyamide resin (A1) or (A2), it is preferable to perform solid phase polymerization. A solid phase polymerization method is not particularly limited, and it can be carried out in an inert gas atmosphere or under reduced pressure by using a batch type heating apparatus or the like.

The polyether polyamide resin (A1) or (A2) obtained by the melt polycondensation is once taken out, pelletized, and then dried for use.

As a heating apparatus which is used for drying or solid phase polymerization, a continuous heat drying apparatus, a rotary drum type heating apparatus called, for example, a tumble dryer, a conical dryer, a rotary dryer, etc., or a cone type heating apparatus equipped with a rotary blade in the inside thereof, called a Nauta mixer, can be suitably used; however, the heating apparatus is not limited to these apparatuses, and known methods and apparatuses can be used.

Examples of the polymerization catalyst include phosphorus atom-containing compounds such as phosphorus compounds, for example, phosphoric acid, phosphorous acid, hypophosphorous acid, etc., or salts or ester compounds thereof, etc. As specific examples of the salt or ester to be formed, metal salts of potassium, sodium, magnesium, calcium, zinc, cobalt, manganese, tin, tungsten, vanadium, germanium. titanium, antimony, etc., ammonium salts, ethyl esters, isopropyl esters, butyl esters, hexyl esters, octadecyl esters, stearyl esters, phenyl esters, and the like can be exemplified. Of these, sodium hypophosphite is preferable because of not only a high effect for promoting an amidation reaction but an excellent effect for preventing coloration. The above-described phosphorus atom-containing compound which can be used in the present invention is not limited to the above-exemplified compounds.

In addition, for the purpose of suppressing coagulation of the above-described polymerization catalyst in the polyamide resin due to thermal deterioration or the like or generation of an abnormal reaction, it is preferable to add an alkali metal or alkaline earth metal compound in combination. Specifically, examples thereof include sodium hydroxide, calcium hydroxide, potassium hydroxide, and magnesium hydroxide as well as alkali metal or alkaline earth metal compounds of carbonic acid, boric acid, acetic acid, propionic acid, butyric acid, isobutyric acid, crotonic acid, valeric acid, caproic acid, isocaproic acid, enanthic acid, caprylic acid, pelargonic acid, stearic acid, cyclopentanecarboxylic acid, cyclohexanecarboxylic acid, hydrocinnamic acid, γ-phenylbutyric acid, p-phenoxybenzoic acid, o-oxycinnamic acid, o-β-chlorophenylpropionic acid, and m-chlorophenylpropionic acid; however, the alkali metal or alkaline earth metal compound is not limited to these compounds. Of these, sodium acetate is preferable. In the case of adding an alkali (or alkaline earth) metal compound in the polycondensation system, a value obtained by dividing the molar number of the subject compound by the molar number of the phosphorus atom-containing compound is regulated to preferably from 0.5 to 1, more preferably from 0.55 to 0.95, and still more preferably from 0.6 to 0.9. When the subject value falls within the foregoing range, an effect for suppressing the promotion of the amidation reaction of the phosphorus atom-containing compound is appropriate; and therefore, the occurrence of the matter that the polycondensation reaction rate is lowered due to excessive suppression of the reaction, so that thermal history of the polymer increases, thereby causing an increase of gelation of the polymer can be avoided.

(Physical properties of polyether polyamide resins (A1) and (A2))

When the polyether polyamide resin (A1) or (A2) which is used for the resin composition of the present invention contains, as a hard segment, a highly crystalline polyamide block formed of the xylylenediamine (a-2) and the α,ω-linear aliphatic dicarboxylic acid having from 4 to 20 carbon atoms and, as a soft segment, a polyether block derived from the polyether diamine compound (a1-1) or (a2-1), it is excellent in terms of melt moldability and molding processability. Furthermore, the resulting polyether polyamide resin is excellent in terms of toughness, flexibility, crystallinity, heat resistance, and the like.

It is preferable that the polyether polyamide resin (A1) or (A2) contains a phosphorus compound such that a phosphorus atom concentration in the finally obtained polyether polyamide resin composition is preferably from 50 to 1,000 ppm.

Incidentally, in the present invention, the phosphorus atom concentration in the polyether polyamide resin composition means a concentration of the phosphorus atom remaining in the organic component after removing the inorganic component such as a filler (B) as described later, etc. from the resin composition.

Though a majority of the phosphorus compound is those derived from the above-described polymerization catalyst, the phosphorus compound is not particularly limited thereto. The phosphorus atom concentration of the polyether polyamide resin (A1) or (A2) is preferably from 50 to 1,000 ppm, more preferably from 100 to 800 ppm, and still more preferably from 150 to 600 ppm. When the above-described phosphorus atom concentration is 50 ppm or more, there is no concern that yellowing is caused at the time of compounding or at the time of molding processing of the polyether polyamide resin composition. In addition, when the phosphorus atom concentration is 1,000 ppm or less, the heat stability and the mechanical strength become favorable.

The phosphorus atom concentration can be adjusted by adjusting the kind or amount of the polymerization catalyst, or a polymerization condition at the time of polymerization of the polyether polyamide resin (A1) or (A2), or washing the resulting polyether polyamide resin (A1) or (A2) by an extraction treatment with an extraction solvent such as water, hot water, etc., thereby removing an excess of the catalyst residue. In the present invention, a method of adjusting the kind or amount of the polymerization catalyst is preferable.

In addition, the phosphorus atom concentration in the polyether polyamide resin (A1) or (A2) can be measured by wet decomposition of the polyether polyamide resin (A1) or (A2) with concentrated sulfuric acid, followed by quantitative

analysis at a wavelength of 213.618 nm by means of high frequency inductive-coupling plasma (ICP) emission analysis.

A sulfur atom concentration of the polyether polyamide resin (A1) or (A2) is preferably from 1 to 200 ppm, more preferably from 10 to 150 ppm, and still more preferably from 20 to 100 ppm. When the sulfur atom concentration falls within the foregoing range, not only an increase of yellowness (YI value) of the polyether polyamide resin at the time of production can be suppressed, but an increase of the YI value on the occasion of melt molding the polyether polyamide resin can be suppressed, thereby making it possible to suppress the YI value of the resulting molded article at a low level.

Furthermore, in the case of using sebacic acid as the dicarboxylic acid, its sulfur atom concentration is preferably from 1 to 500 ppm, more preferably from 1 to 200 ppm, still more preferably from 10 to 150 ppm, and especially preferably from 20 to 100 ppm. When the sulfur atom concentration falls within the foregoing range, an increase of the YI value on the occasion of polymerizing the polyether polyamide resin can be suppressed. In addition, an increase of the YI value on the occasion of melt molding the polyether polyamide resin can be suppressed, thereby making it possible to suppress the YI value of the resulting molded article at a low level.

Similarly, in the case of using sebacic acid as the dicarboxylic acid, its sodium atom concentration is preferably from 1 to 500 ppm, more preferably from 10 to 300 ppm, and still more preferably from 20 to 200 ppm. When the sodium atom concentration falls within the foregoing range, the reactivity on the occasion of synthesizing the polyether polyamide resin is good, the molecular weight can be easily controlled to an appropriate range, and furthermore, the use amount of the alkali metal compound which is blended for the purpose of adjusting the amidation reaction rate as described above can be made small. In addition, an increase of the viscosity on the occasion of melt molding the polyether polyamide resin can be suppressed, and not only the moldability becomes favorable, but the generation of scorch at the time of molding processing can be suppressed, and therefore, the quality of the resulting molded article tends to become favorable.

Such sebacic acid is preferably plant-derived sebacic acid. In view of the fact that the plant-derived sebacic acid contains sulfur compounds or sodium compounds as impurities, the polyether polyamide resin containing, as a constituent unit, a unit derived from plant-derived sebacic acid is low in terms of the YI value even when an antioxidant is not added, and the YI value of the resulting molded article is also low. In addition, it is preferable to use the plant-derived sebacic acid without excessively purifying the impurities. Since it is not necessary to excessively purify the impurities, such is advantageous from the standpoint of costs, too.

In the case of the plant-derived sebacic acid, its purity is preferably from 99 to 100% by mass, more preferably from 99.5 to 100% by mass, and still more preferably from 99.6 to 100% by mass. When the purity of the plant-derived sebacic acid falls within this range, the quality of the resulting polyether polyamide resin is good, and the polymerization is not affected, and hence, such is preferable.

For example, an amount of other dicarboxylic acid (e.g., 1,10-decamethylenedicarboxylic acid, etc.) which is contained in the sebacic acid is preferably from 0 to 1% by mass, more preferably from 0 to 0.7% by mass, and still more preferably from 0 to 0.6% by mass. When the amount of the other dicarboxylic acid falls within this range, the quality of the resulting polyether polyamide resin is good, and the polymerization is not affected, and hence, such is preferable.

In addition, an amount of a monocarboxylic acid (e.g., octanoic acid, nonanoic acid, undecanoic acid, etc.) which is contained in the sebacic acid is preferably from 0 to 1% by mass, more preferably from 0 to 0.5% by mass, and still more preferably from 0 to 0.4% by mass. When the amount of the monocarboxylic acid falls within this range, the quality of the resulting polyether polyamide resin is good, and the polymerization is not affected, and hence, such is preferable.

A hue (APHA) of the sebacic acid is preferably 100 or less, more preferably 75 or less, and still more preferably 50 or less. When the hue of the sebacic acid falls within this range, the YI value of the resulting polyether polyamide resin is low, and hence, such is preferable. Incidentally, the APHA can be measured in conformity with the Standard Methods for the Analysis of Fats, Oils and Related Materials by the Japan Oil Chemists' Society.

A density of the polyether polyamide resin (A1) is preferably in the range of from 1.0 to 1.3 g/cm$^3$, and more preferably in the range of from 1.05 to 1.25 g/cm$^3$. In addition, a density of the polyether polyamide resin (A2) is preferably in the range of from 1.00 to 1.25 g/cm$^3$, and more preferably in the range of from 1.10 to 1.20 g/cm$^3$. When the density of the polyether polyamide resin (A1) or (A2) falls within this range, it is possible to make the polyether polyamide resin have both strength and lightness.

The density of the polyether polyamide resin (A1) or (A2) can be measured in conformity with JIS K7112, Method A (water displacement method).

In addition, a moisture content of the polyether polyamide resin (A1) or (A2) which is used for the resin composition of the present invention is preferably from 0.01 to 0.5% by mass, more preferably from 0.02 to 0.4% by mass, still more preferably from 0.03 to 0.3% by mass, and especially preferably from 0.05 to 0.2% by mass.

When the moisture content of the polyether polyamide resin (A1) or (A2) is 0.5% by mass or less, on the occasion of compounding a filler (B) as described later, there is no concern that the polyether polyamide resin (A1) or (A2) is hydrolyzed, and the mechanical physical properties of the resulting resin composition, such as rigidity, impact

strength, etc., become favorable, and hence, such is preferable.

In addition, when the moisture content of the polyether polyamide resin (A1) or (A2) is 0.01% by mass or more, on the occasion of drying the polyether polyamide resin (A1) or (A2), there is no concern that yellowing is caused, and hence, such is preferable. Furthermore, on the occasion of blending a stabilizer (D), particularly an inorganic stabilizer, and especially a copper compound-type stabilizer at the time of compounding, in view of the fact that the moisture content is 0.01% by mass or more, dispersion of the stabilizer (D) becomes favorable, and there is no concern that physical properties of the resulting polyether polyamide resin composition, such as heat resistance, etc., are lowered, and hence, such is preferable.

In order to adjust the moisture content to such a range, a conventionally known method can be adopted. Examples thereof include a method in which on the occasion of melt extruding the polyamide resin with a vented extruder, vent holes are rendered in a pressure-reduced state, thereby removing the moisture in the polymer, a method in which the polyamide resin is charged in a tumbler (rotary vacuum tank) and dried by heating in air or an inert gas atmosphere or under reduced pressure at a temperature lower than the melting point of the polyamide resin, and the like; however, the method is not limited thereto. The moisture content can also be optimized by adjusting the kind and composition ratio of the raw material diamine component and dicarboxylic acid component.

Incidentally, the moisture content as referred to herein can be measured by the Karl Fischer's method by using pellets of the polyether polyamide resin (A1) or (A2). A measurement temperature is a temperature that is lower by 5°C than the melting point of the polyether polyamide resin (A1) or (A2), and a measurement time is 30 minutes.

A number average molecular weight (Mn) of the polyether polyamide resin (A1) or (A2) is preferably in the range of from 8,000 to 200,000, more preferably in the range of from 9,000 to 150,000, and still more preferably in the range of from 10,000 to 100,000 from the viewpoints of moldability and melt mixing properties with other resins. The number average molecular weight (Mn) is measured by a method described in the Examples.

A melting point of the polyether polyamide resin (A1) is preferably from 150 to 300°C, more preferably from 175 to 270°C, and still more preferably from 180 to 260°C. In addition, a melting point of the polyether polyamide resin (A2) is preferably from 150 to 300°C, more preferably from 175 to 270°C, and still more preferably from 180 to 250°C. When the melting point falls within the foregoing range, the heat resistance is favorable, and the moldability is favorable.

Incidentally, the melting point of the polyether polyamide resin (A1) or (A2) can be measured by the differential scanning colorimetry (DSC), and the melting point means a melting point measured by once heat melting a sample to eliminate any influence against crystallinity due to a thermal history and then again performing temperature rise. Specifically, the melting point is measured by a method described in the Examples.

A relative viscosity of the polyether polyamide resin (A1) is preferably in the range of from 1.1 to 3.0, more preferably in the range of from 1.1 to 2.9, and still more preferably in the range of from 1.1 to 2.8 from the viewpoints of moldability and melt mixing properties with other resins. A relative viscosity of the polyether polyamide resin (A2) is preferably in the range of from 1.1 to 3.0, more preferably in the range of from 1.1 to 2.0, and still more preferably in the range of from 1.1 to 1.9 from the viewpoints of moldability and melt mixing properties with other resins. The relative viscosity is measured by a method described in the Examples.

<Filler (B)>

The filler (B) which is blended in the polyether polyamide resin composition of the present invention is not particularly limited so long as it is one which is generally used for compositions of this kind, and powdered, fibrous, granular, or plate-like inorganic fillers as well as resin-based fillers or natural fillers can also be preferably used.

As the powdered or granular filler, those having a particle diameter of 100 μm or less are preferable, and those having a particle diameter of 80 μm or less are more preferable; and kaolinite, silica, carbonates such as calcium carbonate, magnesium carbonate, etc., sulfates such as calcium sulfate, magnesium sulfate, etc., alumina, glass beads, carbon black, sulfides, metal oxides, and the like can be used. As the fibrous filler, glass fiber, whisker of potassium titanate or calcium sulfate, wollastonite, carbon fiber, mineral fiber, alumina fiber, and the like can be used. Examples of the plate-like filler include glass flake, mica, talc, clay, graphite, sericite, and the like. Of these, at least one member selected from glass fiber, talc, mica, and wollastonite is preferable, and glass fiber is especially preferable.

As the resin-based fiber, an aromatic crystalline polyester resin, an wholly aromatic polyamide resin, acrylic fiber, poly(benzimidazole) fiber, and like are also exemplified.

Examples of the natural filler include kenaf, pulp, hemp pulp, wood pulp, and the like.

In the present invention, the filler may be used solely or may be used in combination of two or more kinds thereof.

A blending amount of the filler (B) is from 15 to 200 parts by mass, preferably from 30 to 180 parts by mass, and more preferably from 50 to 150 parts by mass based on 100 parts by mass of the polyether polyamide resin (A1) or (A2). When the content of the filler (B) is less than 15 parts by mass, the mechanical strength of a molded article of the resulting polyether polyamide resin composition is insufficient. On the other hand, when the content exceeds 200 parts by mass, the fluidity of the polyether polyamide resin composition is deteriorated, so that melt kneading, molding,

and the like become difficult.

<Carbodiimide compound (C)>

In the polyether polyamide resin composition of the present invention, a carbodiimide compound can be blended as a hydrolysis resistance improver.

The carbodiimide compound (C) which is used in the present invention is a compound having one or more carbodiimide groups in a molecule thereof.

When the carbodiimide compound (C) is blended in the above-described polyether polyamide resin (A1) or (A2), a part or the whole of the carbodiimide compound (C) reacts with the above-described polyether polyamide resin (A1) or (A2) at the time of melt kneading, thereby making it possible to form a polyether polyamide resin composition having high hydrolysis resistance and also having a high molecular weight. In order to allow the polyether polyamide resin (A1) or (A2) to have a high molecular weight, it is necessary to perform melt polycondensation for a long period of time; and on that occasion, there may be the case where heat deterioration of the polyether diamine compound (a1-1) or (a2-1) represented by the foregoing general formula (1) or (2) is caused, and therefore, by blending a prescribed amount of the carbodiimide compound (C) in the polyether polyamide resin (A1) or (A2) and heat melting the blend, it is possible to obtain a polyether polyamide resin composition having a high molecular weight by means of heat melting for a short period of time.

Examples of the carbodiimide compound (C) which is used in the present invention include aromatic or aliphatic carbodiimide compounds. Of these, from the viewpoints of a degree of revealment of the effect of hydrolysis resistance and transparency, it is preferable to use an aliphatic carbodiimide compound; from the standpoint of melt kneading properties at the time of extrusion, it is more preferable to use an aliphatic or alicyclic polycarbodiimide compound having two or more carbodiimide groups in a molecule thereof; and it is still more preferable to use a polycarbodiimide produced from 4,4'-dicyclohexylmethane diisocyanate. Examples of the polycarbodiimide produced from 4,4'-dicyclohexylmethane diisocyanate include "CARBODILITE LA-1", manufactured by Nisshinbo Holdings Inc. and the like.

The above-described polycarbodiimide can be produced by subjecting an organic diisocyanate to a decarboxylation condensation reaction. For example, a method of synthesizing a polycarbodiimide by subjecting an organic diisocyanate of every kind to a decarboxylation condensation reaction in the presence of a carbodiimidation catalyst at a temperature of about 70°C or higher in an inert solvent or without using a solvent, and the like can be exemplified.

An isocyanate group content in the carbodiimide compound (C) is preferably from 0.1 to 5% by mole, and more preferably from 1 to 3% by mole. By allowing the isocyanate group content to fall within the foregoing range, the reaction with the polyether polyamide resin (A1) or (A2) becomes easy, whereby the hydrolysis resistance tends to become favorable.

As a monocarbodiimide compound having one carbodiimide group in a molecule thereof, which is included in the above-described carbodiimide compound (C), dicyclohexyl carbodiimide, diisopropyl carbodiimide, dimethyl carbodiimide, diisobutyl carbodiimide, dioctyl carbodiimide, t-butylisopropyl carbodiimide, diphenyl carbodiimide, di-t-butyl carbodiimide, di-β-naphthyl carbodiimide, and the like can be exemplified; and of these, dicyclohexyl carbodiimide and diisopropyl carbodiimide are especially suitable from the standpoint of easiness of industrial availability.

As a polycarbodiimide compound having two or more carbodiimide groups in a molecule thereof, which is included in the above-described carbodiimide compound (C), those produced by various methods can be used; however, basically, those produced by a conventional production method of a polycarbodiimide (U.S Patent No. 2,941,956, JP-B-47-33279, J. Org. Chem., 28, 2069-2075 (1963), or Chemical Review 1981, Vol. 81, No. 4, pp.619-621) can be used.

In addition, as the organic diisocyanate that is a synthetic raw material of the above-described polycarbodiimide compound, for example, various organic diisocyanates such as aromatic diisocyanates, aliphatic diisocyanates, alicyclic diisocyanates, etc., or mixtures thereof can be used.

Specifically, as the organic diisocyanate, 1,5-naphtalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, hexamethylene diisocyanate, cyclohexane-1,4-diisocyanate, xylylene diisocyanate, isophorone diisocyanate, dicyclohexylmethane-4,4-diisocyanate, methylcyclohexane diisocyanate, tetramethylxylylene diisocyanate, 2,6-diisopropylphenyl isocyanate, 1,3,5-triisopropylbenzene-2,4-diisocyanate, methylenebis(4,1-cyclohexylene) diisocyanate, and the like can be exemplified. These may be used solely or may be used in combination of two or more kinds thereof.

In addition, of these, dicyclohexylmethane-4,4-diisocyanate and methylenebis(4,1-cyclohexylene) diisocyanate are preferable.

For the purpose of sealing a terminal of the carbodiimide compound (C) to control a degree of polymerization thereof, a terminal sealing agent such as a monoisocyanate, etc. can be used. Examples of the monoisocyanate include phenyl isocyanate, tolyl isocyanate, dimethylphenyl isocyanate, cyclohexyl isocyanate, butyl isocyanate, naphthyl isocyanate, and the like. These may be used solely or may be used in combination of two or more kinds thereof.

Incidentally, the terminal sealing agent is not limited to the above-described monoisocyanates, but it may be an active hydrogen compound capable of reacting with the isocyanate. As such an active hydrogen compound, among aliphatic, aromatic or alicyclic compounds, compounds having an -OH group, including methanol, ethanol, phenol, cyclohexanol, N-methylethanolamine, polyethylene glycol monomethyl ether, and polypropylene glycol monomethyl ether; secondary amines such as diethylamine, dicyclohexylamine, etc.; primary amines such as butylamine, cyclohexylamine, etc.; carboxylic acids such as succinic acid, benzoic acid, dicyclohexanecarboxylic acid, etc.; thiols such as ethyl mercaptan, allyl mercaptan, thiophenol, etc.; compounds having an epoxy group; and the like can be exemplified. These may be used solely or may be used in combination of two or more kinds thereof.

As the carbodiimidation catalyst, for example, phospholene oxides such as 1-phenyl-2-phospholene-1-oxide, 3-methyl-1-phenyl-2-phospholene-1-oxide, 1-methyl-2-phospholene-1-oxide, 3-methyl-2-phospholene-1-oxide, and 3-phospholene isomers thereof, etc.; metal catalysts such as tetrabutyl titanate, and the like can be used; and of these, 3-methyl-1-phenyl-2-phospholene-1-oxide is suitable from the standpoint of reactivity. The carbodiimidation catalyst may be used solely or may be used in combination of two or more kinds thereof.

A number average molecular weight (Mn) of the carbodiimide compound (C) which is used in the present invention is preferably in the range of 20,000 or less, and more preferably in the range of 10,000 or less from the viewpoint of dispersibility into the polyether polyamide resin (A1) or (A2). When the number average molecular weight (Mn) of the carbodiimide compound (C) is more than 20,000, the dispersibility into the polyether polyamide resin (A1) or (A2) is lowered, and the effects of the present invention are not thoroughly obtained.

In the polyether polyamide resin composition of the present invention, a blending amount of the carbodiimide compound (C) is preferably from 0.1 to 2 parts by mass, more preferably from 0.1 to 1.5 parts by mass, still more preferably from 0.2 to 1.5 parts by mass, and especially preferably from 0.3 to 1.5 parts by mass based on 100 parts by mass of the polyether polyamide resin (A1) or (A2). When the above-described blending amount is 0.1 parts by mass or more, an effect for improving the hydrolysis resistance can be thoroughly revealed, whereas when the blending amount is 2 parts by mass or less, it is possible to avoid generation of abrupt thickening on the occasion of producing a resin composition, and the melt kneading properties and molding processability become favorable.

<Stabilizer (D)>

In the polyether polyamide resin composition of the present invention, a stabilizer (antioxidant or heat stabilizer) can be blended. Examples of the stabilizer include organic stabilizers such as amine-type, organic sulfur-type, phosphorus-type, or phenol-type organic stabilizers, etc. and inorganic stabilizers such as copper compounds, halides, etc.

Among the stabilizers, from the viewpoint of enhancing heat stability and heat aging resistance, it is preferable to use at least one member selected from an amine compound, an organic sulfur compound, a phenol compound, a phosphorus compound, and an inorganic compound. Furthermore, from the viewpoint of enhancing processing stability, heat stability, and heat aging resistance at the time of melt molding as well as the viewpoint of appearance of the molded article, particularly prevention of coloration, it is preferable to use at least one member selected from an amine compound, an organic sulfur compound, and an inorganic compound. In particular, an aromatic secondary amine compound is preferable.

In the present invention, the stabilizer may be used solely or may be used in combination of two or more kinds thereof.

(Amine compound)

As the amine compound, an aromatic secondary amine compound is preferable; a compound having a diphenylamine skeleton, a compound having a phenylnaphthylamine skeleton, and a compound having a dinaphthylamine skeleton are preferable; and a compound having a diphenylamine skeleton and a compound having a phenylnaphthylamine skeleton are more preferable.

Specifically, compounds having a diphenylamine skeleton, such as a p,p'-dialkyldiphenylamine (carbon number of the alkyl group: 8 to 14), octylated diphenylamine (available as, for example, a trade name: IRGANOX 5057, manufactured by BASF SE and a trade name: NOCRAC AD-F, manufactured by Ouchi Shinko Chemical Industrial Co., Ltd.), 4,4'-bis($\alpha$,$\alpha$-dimethylbenzyl)diphenylamine (available as, for example, a trade name: NOCRAC CD, manufactured by Ouchi Shinko Chemical Industrial Co., Ltd.), p-(p-toluenesulfonylamide)diphenylamine (available as, for example, a trade name: NOCRAC TD, manufactured by Ouchi Shinko Chemical Industrial Co., Ltd.), N,N'-diphenyl-p-phenylenediamine (available as, for example, a trade name: NOCRAC DP, manufactured by Ouchi Shinko Chemical Industrial Co., Ltd.), N-phenyl-N'-isopropyl-p-phenylenediamine (available as, for example, a trade name: NOCRAC 810-NA, manufactured by Ouchi Shinko Chemical Industrial Co., Ltd.), N-phenyl-N'-(1,3-dimethylbutyl)-p-phenylenediamine (available as, for example, a trade name: NOCRAC 6C, manufactured by Ouchi Shinko Chemical Industrial Co., Ltd.), N-phenyl-N'-(3-methacryloyloxy-2-hydroxypropyl)-p-phenylenediamine (available as, for example, a trade name: NOCRAC G-1, manufactured by Ouchi Shinko Chemical Industrial Co., Ltd.), etc.;
compounds having a phenylnaphthylamine skeleton, such as N-phenyl-1-naphthyl amine (available as, for example, a trade name: NOCRAC PA, manufactured by Ouchi Shinko Chemical Industrial Co., Ltd.), N,N'-di-2-naphthyl-p-phenylenediamine (available as, for example, a trade name: NOCRAC White, manufactured by Ouchi Shinko Chemical Industrial Co., Ltd.), etc.;
compounds having a dinaphthylamine skeleton, such as 2,2'-dinaphthylamine, 1,2'-dinaphthylamine, 1,1'-dinaphthylamine, etc.; and
mixtures thereof can be exemplified; however, the amine compound is not limited to these compounds.

Of these, 4,4'-bis(α,α-dimethylbenzyl)diphenylamine, N,N'-di-2-naphthyl-p-phenylenediamine, and N,N'-diphenyl-p-phenylenediamine are preferable, and N,N'-di-2-naphthyl-p-phenylenediamine and 4,4'-bis(α,α-dimethylbenzyl)diphenylamine are especially preferable.

(Organic sulfur compound)

As the organic sulfur compound, a mercapto benzimidazole compound, a dithiocarbamic acid compound, a thiourea compound, and an organic thioic acid compound are preferable, and a mercapto benzimidazole compound and an organic thioic acid compound are more preferable.

Specifically, mercapto benzimidazole compounds such as 2-mercapto benzimidazole (available as, for example, a trade name: NOCRAC MB, manufactured by Ouchi Shinko Chemical Industrial Co., Ltd.), 2-mercapto methylbenzimidazole (available as, for example, a trade name: NOCRAC MMB, manufactured by Ouchi Shinko Chemical Industrial Co., Ltd.), a metal salt of 2-mercapto benzimidazole, etc.;
organic thioic acid compounds such as dilauryl 3,3'-thiodipropionate (available as, for example, a trade name: DLTP "Yoshitomi", manufactured by API Corporation and a trade name: SUMILIZER TPL-R, manufactured by Sumitomo Chemical Co., Ltd.), dimyristyl 3,3'-thiodipropionate (available as, for example, a trade name: DMTP "Yoshitomi", manufactured by API Corporation and a trade name: SUMILIZER TPM, manufactured by Sumitomo Chemical Co., Ltd.), distearyl 3,3'-thiodipropionate (available as, for example, a trade name: DSTP "Yoshitomi", manufactured by API Corporation and a trade name: SUMILIZER TPS, manufactured by Sumitomo Chemical Co., Ltd.), pentaerythritol tetrakis(3-lauryl thiopropionate) (available as, for example, a trade name: SUMILIZER TP-D, manufactured by Sumitomo Chemical Co., Ltd.), etc.;
dithiocarbamic acid compounds such as a metal salt of diethyldithiocarbamic acid, a metal salt of dibutyldithiocarbamic acid, etc.;
thiourea compounds such as 1.3-bis(dimethylaminopropyl)-2-thiourea (available as, for example, a trade name: NOCRAC NS-10-N, manufactured by Ouchi Shinko Chemical Industrial Co., Ltd.), tributylthiourea, etc.; and
mixtures thereof can be exemplified; however, the organic sulfur compound is not limited to these compounds.

In addition, these organic sulfur compounds may be used solely or may be used in combination of two or more kinds thereof.

Of these organic sulfur compounds, 2-mercapto benzimidazole, 2-mercapto methylbenzimidazole, dimyristyl 3,3'-thiodipropionate, distearyl 3,3'-thiodipropionate, and pentaerythritol tetrakis(3-lauryl thiopropionate) are preferable; pentaerythritol tetrakis(3-lauryl thiopropionate), 2-mercapto benzimidazole, and dimyristyl 3,3'-thiodipropionate are more preferable; and pentaerythritol tetrakis(3-lauryl thiopropionate) is especially preferable.

A molecular weight of the organic sulfur compound is generally 200 or more, and preferably 500 or more, and an upper limit thereof is generally 3,000.

In the case of blending the above-described amine-type stabilizer and organic sulfur-type stabilizer, these may be used in combination. By using these compounds in combination, the heat aging resistance of the polyether polyamide resin composition tends to become favorable.

Examples of a suitable combination of the amine-type stabilizer with the organic sulfur-type stabilizer include a combination of at least one amine-type stabilizer selected from 4,4'-bis(α,α-dimethylbenzyl)diphenylamine and N,N'-di-2-naphthyl-p-phenylenediamine with at least one organic sulfur-type stabilizer selected from dimyristyl 3,3'-thiodipropionate, 2-mercapto methylbenzimidazole, and pentaerythritol tetrakis(3-lauryl thiopropionate). Furthermore, a combination in which the amine-type stabilizer is N,N'-di-2-naphthyl-p-phenylenediamine, and the organic sulfur-type stabilizer is pentaerythritol tetrakis(3-lauryl thiopropionate) is more preferable.

In addition, in the case of using the amine-type stabilizer and the organic sulfur-type stabilizer in combination, a ratio of the amine-type stabilizer to the organic sulfur-type stabilizer is preferably from 0.05 to 15, more preferably from 0.1 to 5, and still more preferably from 0.2 to 2 in terms of a content ratio (mass ratio) in the polyether polyamide resin composition.

(Phenol compound)

As the phenol compound (B3), for example, 2,2'-methylene bis(4-methyl-6-t-butylphenol) (available as, for example, a trade name: YOSHINOX 425, manufactured by API Corporation), 4,4'-butylidene bis(6-t-butyl-3-methylphenol) (available as, for example, a trade name: ADEKA STAB AO-40, manufactured by Adeka Corporation and a trade name: SUMILIZER BBM-S, manufactured by Sumitomo Chemical Co., Ltd.), 4,4'-thiobis(6-t-butyl-3-methylphenol) (available as, for example, a trade name: ANTAGE CRYSTAL, manufactured by Kawaguchi Chemical Industry Co., Ltd.), 3,9-bis[2-[3-(3-t-butyl-4-hydroxy-5-methylphenyl)propionyloxy]-1,1-dimethylethyl]-2,4,8,10-tetraoxaspiro[5.5]undecane (available as, for example, a trade name: SUMILIZER GA-80, manufactured by Sumitomo Chemical Co., Ltd. and a trade name: ADEKA STAB AO-80, manufactured by Adeka Corporation), triethylene glycol bis[3-(3-t-butyl-5-methyl-4-hydroxyphenyl)propionate (available as, for example, a trade name: IRGANOX (R)245, manufactured by BASF SE), 1,6-hexanediol bis[3-(3,5-di-t-butyl-4-hydroxyphenyl)propionate] (available as, for example, a trade name: IRGANOX 259, manufactured by BASF SE), 2,4-bis(n-octylthio)-6-(4-hydroxy-3,5-di-t-butylanilino)-1,3,5-triazine (available as, for example, a trade name: IRGANOX 565, manufactured by BASF SE), pentaerythritol tetrakis[3-(3,5-di-t-butyl-4-hydroxyphenyl)propionate] (available as, for example, a trade name: IRGANOX 1010, manufactured by BASF SE and a trade name: ADEKA STAB AO-60, manufactured by Adeka Corporation), 2,2-thiodiethylene bis[3-(3,5-di-t-butyl-4-hydroxyphenyl)propionate] (available as, for example, a trade name: IRGANOX 1035, manufactured by BASF SE), octadecyl 3-(3,5-di-t-butyl-4-hydroxyphenyl)propionate (available as, for example, a trade name: IRGANOX 1076, manufactured by BASF SE and a trade name: ADEKA STAB AO-50, manufactured by Adeka Corporation), N,N'-hexamethylene bis(3,5-di-t-butyl-4-hydroxy-hydrocinnamide) (available as, for example, a trade name: IRGANOX 1098, manufactured by BASF SE), diethyl 3,5-di-t-butyl-4-hydroxybenzylphosphonate (available as, for example, a trade name: IRGANOX 1222, manufactured by BASF SE), 1,3,5-trimethyl-2,4,6-tris(3,5-di-t-butyl-4-hydroxybenzyl)benzene (available as, for example, a trade name: IRGANOX 1330, manufactured by BASF SE), tris(3,5-di-t-butyl-4-hydroxybenzyl) isocyanurate (available as, for example, a trade name: IRGANOX 3114, manufactured by BASF SE and a trade name: ADEKA STAB AO-20, manufactured by Adeka Corporation), 2,4-bis[(octylthio)methyl]-o-cresol (available as, for example, a trade name: IRGANOX 1520, manufactured by BASF SE), isooctyl 3-(3,5-di-t-butyl-4-hydroxyphenyl)propionate (available as, for example, a trade name: IRGANOX 1135, manufactured by BASF SE), and the like can be exemplified; however, the phenol compound is not limited to these compounds. In addition, these phenol compounds may be used solely or may be used in combination of two or more kinds thereof.

Of these, octadecyl 3-(3,5-di-t-butyl-4-hydroxyphenyl)propionate, 1,6-hexanediol bis[3-(3,5-di-t-butyl-4-hydroxyphenyl)propionate], pentaerythritol tetrakis[3-(3,5-di-t-butyl-4-hydroxyphenyl)propionate], N,N'-hexamethylene bis(3,5-di-t-butyl-4-hydroxy-hydrocinnamide), 3,9-bis[2-[3-(3-t-butyl-4-hydroxy-5-methylphenyl)propionyloxy]-1,1-dimethyl ethyl]-2,4,8,10-tetraoxaspiro[5.5]undecane, and a hindered phenol compound of N,N'-hexamethylene bis(3,5-di-t-butyl-4-hydroxyhydrocinnamide) are preferable.

(Phosphorus compound)

As the phosphorus compound, a phosphite compound and a phosphonite compound are preferable.

As the phosphite compound, for example, distearyl pentaerythritol diphosphite (available as, for example, a trade name: ADEKA STAB PEP-8, manufactured by Adeka Corporation and a trade name: JPP-2000, manufactured by Johoku Chemical Co., Ltd.), dinonylphenyl pentaerythritol diphosphite (available as, for example, a trade name: ADEKA STAB PEP-4C, manufactured by Adeka Corporation), bis(2,4-di-t-butylphenyl)pentaerythritol diphosphite (available as, for example, a trade name: IRGAFOS 126, manufactured by BASF SE and a trade name: ADEKA PEP-24G, manufactured by Adeka Corporation), bis(2,6-di-t-butyl-4-methylphenyl)pentaerythritol diphosphite (available as, for example, a trade name: ADEKA STAB PEP-36, manufactured by Adeka Corporation), bis(2,6-di-t-butyl-4-ethylphenyl)pentaerythritol diphosphite, bis(2,6-di-t-butyl-4-isopropylphenyl)pentaerythritol diphosphite, bis(2,4,6-tri-t-butylphenyl)pentaerythritol diphosphite, bis(2,6-di-t-butyl-4-sec-butylphenyl)pentaerythritol diphosphite, bis(2,6-di-t-butyl-4-t-octylphenyl)pentaerythritol diphosphite, bis(2,4-dicumylphenyl)pentaerythritol diphosphite, and the like are exemplified; and bis(2,6-di-t-butyl-4-methylphenyl)pentaerythritol diphosphite and bis(2,4-dicumylphenyl)pentaerythritol diphosphite (available as, for example, a trade name: ADEKA STAB PEP-45, manufactured by Adeka Corporation) are especially preferable. These phosphite compounds may be used solely or may be used in combination of two or more kinds thereof.

As the phosphonite compound, for example, tetrakis(2,4-di-t-butylphenyl)-4,4'-biphenylene diphosphonite (available as, for example, a trade name: IRGAFOS P-EPQ, manufactured by BASF SE), tetrakis(2,5-di-t-butylphenyl)-4,4'-biphenylene diphosphonite, tetrakis(2,3,4-trimethylphenyl)-4,4'-biphenylene diphosphonite, tetrakis(2,3-dimethyl-5-ethylphenyl)-4,4'-biphenylene diphosphonite, tetrakis(2,6-di-t-butyl-5-ethylphenyl)-4,4'-biphenylene diphosphonite, tetrakis(2,3.4-tributylphenyl)-4,4'-biphenylene diphosphonite, tetrakis(2,4,6-tri-t-butylphenyl)-4,4'-biphenylene diphosphonite, and the like are exemplified; and tetrakis(2,4-di-t-butylphenyl)-4,4'-biphenylene diphosphonite is especially preferable. These phosphonite compounds may be used solely or may be used in combination of two or more kinds

thereof.

(Inorganic stabilizer)

As the inorganic stabilizer, a copper compound and a halide are preferable.

The copper compound which is used as the inorganic stabilizer includes a variety of inorganic acid or organic acid copper salts but excludes a halide as described later. The copper salt may be either a cuprous salt or a cupric salt, and specific examples thereof include copper chloride, copper bromide, copper iodide, copper phosphate, and copper stearate and besides, natural minerals such as hydrotalcite, stichtite, pyrolite, etc.

In addition, as the halide which is used as the inorganic stabilizer, for example, alkali metal or alkaline earth metal halides; ammonium halides and quaternary ammonium halides of an organic compound; and organic halides such as alkyl halides, aryl halides, etc. are exemplified, and specific examples thereof include ammonium iodide, stearyltriethylammonium bromide, benzyltriethylammonium iodide, and the like. Of these, alkali metal halides such as potassium chloride, sodium chloride, potassium bromide, potassium iodide, sodium iodide, etc. are suitable.

A combined use of the copper compound and the halide, particularly a combined use of the copper compound and the alkali metal halide, is preferable because excellent effects are revealed from the standpoints of resistance to heat discoloration and weather resistance (light fastness). For example, in the case where the copper compound is used solely, there is a concern that the molded article is colored reddish brown by copper, and this coloration is not preferable depending upon an application. In that case, by using the copper compound and the halide in combination, it is possible to prevent discoloration into a reddish brown color. These inorganic compounds may be used solely or may be used in combination of two or more kinds thereof.

In the present invention, among the above-described stabilizers, inorganic, aromatic secondary amine-type, or organic sulfur-type stabilizers are especially preferable from the standpoints of processing stability and heat aging resistance at the time of melt molding, appearance of the molded article, and prevention of coloration.

A blending amount of the stabilizer (D) in the polyether polyamide resin composition of the present invention is preferably from 0.01 to 1 part by mass, and more preferably from 0.01 to 0.8 parts by mass based on 100 parts by mass of the polyether polyamide resin (A1) or (A2). When the blending amount of the stabilizer (D) is 0.01 parts by mass or more, effects for improving the heat discoloration and improving the weather resistance/light fastness can be thoroughly revealed, whereas when the blending amount of the stabilizer (D) is 1 part by mass or less, an appearance defect and a lowering of mechanical physical properties of the molded article can be suppressed.

<Other additives>

The polyether polyamide resin composition of the present invention can be blended with additives such as a matting agent, an ultraviolet ray absorber, a plasticizer, a flame retarder, an antistatic agent, a coloration preventive, a gelation preventive, etc. as the need arises within the range where properties thereof are not hindered.

In addition, in the polyether polyamide resin composition of the present invention, a crystal nucleating agent can be used according to desired molding processability. Examples of the crystal nucleating agent include generally used talc and boron nitride, and the like; however, an organic nucleating agent may also be used.

In the case of an organic nucleating agent or boron nitride, a blending amount of the crystal nucleating agent is preferably from 0.001 to 6 parts by mass, more preferably from 0.02 to 2 parts by mass, and still more preferably from 0.05 to 1 part by mass based on 100 parts by mass of the polyether polyamide resin (A1) or (A2). When the blending amount of the nucleating agent is too small, an expected nucleating agent effect is not obtained, and there may be the case where the mold release properties are lowered, whereas when it is too large, the impact resistance or surface appearance tends to be lowered. In the case of using talc, its blending amount is preferably from 0.1 to 8 parts by mass, and more preferably from 0.3 to 2 parts by mass. In the case of an inorganic nucleating agent other than talc or boron nitride, its blending amount is preferably from 0.3 to 8 parts by mass, and more preferably from 0.5 to 4 parts by mass. When the blending amount of such an inorganic nucleating agent is too small, a nucleating agent effect is not obtained, whereas when it is too large, a foreign matter effect is revealed, so that the mechanical strength or impact resistance value tends to be lowered. In the present invention, from the standpoint of mechanical properties such as impact resistance, tensile elongation, bending deflection amount, etc., it is preferable to blend talc or boron nitride.

The talc which is used as the crystal nucleating agent is preferably one having a number average particle diameter of 2 μm or less. As the boron nitride, its number average particle diameter is generally 10 μm or less, preferably from 0.005 to 5 μm, and more preferably from 0.01 to 3 μm. Incidentally, the number average particle diameter of talc is generally a value obtained by the measurement with a laser diffraction/scattering particle size analyzer.

In addition, the polyether polyamide resin composition pf the present invention can also be blended with one or plural kinds of thermoplastic resins other than the polyether polyamide resin (A1) or (A2), for example, a polyphenylene ether resin, a polystyrene resin, a polyester resin, a polyolefin resin, a polyphenylene sulfide resin, a polycarbonate

resin, etc., within the range where the object and effects of the present invention are not hindered.

In the present invention, the effects of the present invention can be thoroughly achieved even without blending a polyamide resin other than the polyether polyamide resin (A1) or (A2); however, it is not excluded to add an aliphatic polyamide resin such as polyamide 6, polyamide 66, polyamide 11, polyamide 12, polyamide 46, polyamide 6/10, polyamide 6/12, polyamide 6/66, etc., or an aromatic polyamide resin such as polyamide 6I, polyamide 6T, polyamide 6I/6T, polyamide 9T, etc. solely or plurally.

In the case of blending a polyamide resin other than the polyether polyamide resin (A1) or (A2), of these, when polyamide 6 and/or polyamide 66 is blended, a crystallization rate of the polyether polyamide resin composition becomes faster, and a molding cycle at the time of molding can be more shortened, and hence, such is preferable.

[Production method of polyether polyamide resin composition]

A method for producing the polyether polyamide resin composition of the present invention is not particularly limited, and the polyether polyamide resin composition can be produced by mixing and kneading the polyether polyamide resin (A1) or (A2) and the filler (B) and other component to be blended as the need arises, in an arbitrary order. Above all, a method of performing melt kneading by using every kind of a generally used extruder such as a single-screw or twin-screw extruder, etc. is preferable, and a method of using a twin-screw extruder is especially preferable from the standpoints of productivity, versatility, and the like. On that occasion, it is preferable to adjust a melt kneading temperate at from 200 to 300°C and a retention time at 10 minutes or less, respectively, and it is preferable to perform melt kneading by using a twin-screw extruder in which the screw has at least one or more reverse helix element portions and/or kneading disc portions, while allowing a part of the polyether polyamide resin composition to retain in the subject portion(s). By allowing the melt kneading temperature to fall within the foregoing range, an extrusion kneading defect or decomposition of the resin tends to be hardly caused. In addition, in the case of blending glass fiber as the filler, it is preferable to perform melt kneading by means of side-feeding on the way of the extruder.

[Physical properties of polyether polyamide resin composition]

In the following description of physical properties, the "polyether polyamide resin composition" means a polyether polyamide resin composition having the polyether polyamide resin (A 1) blended therein, or a polyether polyamide resin composition having the polyether polyamide resin (A2) blended therein, unless otherwise specifically indicated.

A moisture content of the polyether polyamide resin composition of the present invention is preferably from 0.01 to 0.1% by mass, more preferably from 0.02 to 0.09% by mass, and still more preferably from 0.03 to 0.08% by mass.

When the moisture content is 0.01% by mass or more, there is no concern that the polyether polyamide resin composition charges with electricity, and on the occasion of molding, composition pellets do not attach to a molding machine hopper or feeder, or the like, so that molding can be achieved favorably. In addition, when the moisture content is 0.1% by mass or less, there is no concern that hydrolysis is caused at the time of molding processing, and the resulting molded article is favorable in physical properties such as elastic modulus, etc. and long-term stability of physical properties, and hence, such is preferable.

The moisture content of the polyether polyamide resin composition can be, for example, adjusted according to a method of drying, a degree of pressure reduction of an extruder vacuum vent at the time of compounding or a degree of sequent cooling, or the like.

In the case of drying the polyether polyamide resin composition, the adjustment can be performed by a known method. Examples of the method include a method in which the polyether polyamide resin composition is charged in a heatable tumbler (rotary vacuum tank) equipped with a vacuum pump or a vacuum dryer and heated for drying under reduced pressure at a temperature of the melting point of the polyether polyamide resin or lower, and preferably 160°C or lower for an appropriate time so as to reach the desired moisture content, and the like; however, the method is not limited thereto. In addition, the moisture content can also be optimized by adjusting the kind and composition ratio of the raw material diamine component and dicarboxylic acid component.

Incidentally, the moisture content as referred to herein can be measured by the Karl Fischer's method by using pellets of the polyether polyamide resin composition. A measurement temperature is a temperature that is lower by 5°C than the melting point of the polyether polyamide resin (A1) or (A2), and a measurement time is 30 minutes.

In addition, a phosphorus atom concentration in the polyether polyamide resin composition of the present invention is preferably from 50 to 1,000 ppm. Though a majority of the phosphorus atom is derived from the above-described polymerization catalyst of the polyether polyamide resin (A1) or (A2), the phosphorus atom is not particularly limited thereto. The phosphorus atom concentration of the polyether polyamide resin composition is more preferably from 50 to 800 ppm, still more preferably from 100 to 600 ppm, and especially preferably from 150 to 400 ppm.

When the phosphorus atom concentration in the polyether polyamide resin composition is 50 ppm or more, there is no concern that yellowing is caused at the time of compounding or at the time of molding processing of the

polyether polyamide resin composition. In addition, when the phosphorus atom concentration is 1,000 ppm or less, the heat stability and the mechanical strength become favorable.

Incidentally, in the present invention, the phosphorus atom concentration in the polyether polyamide resin composition means a concentration of the phosphorus atom remaining in the organic component after removing the inorganic component such as the filler (B), etc. from the polyether polyamide resin composition.

The phosphorus atom concentration in the polyether polyamide resin composition can be adjusted by adjusting the kind or amount of the polymerization catalyst, or a polymerization condition at the time of polymerization of the polyether polyamide resin (A1) or (A2) that is the raw material of the resin composition, or washing the polyether polyamide resin (A1) or (A2) by an extraction treatment with an extraction solvent such as water, hot water, etc., thereby removing an excess of the catalyst residue. In addition, the phosphorus atom concentration can also be adjusted by further blending a variety of additives having a phosphorus atom, such as a phosphorus-type stabilizer, etc., in the polyether polyamide resin (A1) or (A2) and the filler (B) at the time of producing the polyether polyamide resin composition of the present invention. In the present invention, a method of adjusting the kind or amount of the polymerization catalyst of the polyether polyamide resin (A1) or (A2) is preferable.

The phosphorus atom concentration in the polyether polyamide resin composition can be measured by wet decomposition of the polyether polyamide resin composition with concentrated sulfuric acid, followed by quantitative analysis at a wavelength of 213.618 nm by means of high frequency inductive-coupling plasma (ICP) emission analysis.

An especially preferred embodiment of the present invention is concerned with the case where as described previously, not only the moisture content of the raw material polyether polyamide resin (A1) or (A2) is from 0.01 to 0.5% by mass, but the moisture content of the resulting polyether polyamide resin composition is from 0.01 to 0.1% by mass.

There may be the case where even by adjusting the moisture content of the desired polyether polyamide resin composition to from 0.01 to 0.1% by mass by using the raw material polyether polyamide resin (A1) or (A2) having a moisture content exceeding 0.5% by mass, the desired effects of the present invention are not obtained. In addition, conversely, even by using the raw material polyether polyamide resin (A1) or (A2) having a moisture content of from 0.01 to 0.5% by mass, there may be the case where the moisture content of the resulting polyether polyamide resin composition falls outside the foregoing range, or the case where the desired effects of the present invention are not obtained. By allowing the moisture contents of both the raw material polyether polyamide resin (A1) or (A2) and the polyether polyamide resin composition obtained by using the same to fall within the foregoing ranges, it becomes easy to obtain a polyether polyamide resin composition which is not only light but excellent in terms of mechanical strength, appearance, and color tone.

In the case of a polyether polyamide resin composition having the polyether polyamide resin (A1) blended therein, from the viewpoint of mechanical strength, the impact strength (Charpy impact strength in conformity with ISO179) of the polyether polyamide resin composition is preferably 20.3 $kJ/m^2$ or more, more preferably 21.0 $kJ/m^2$ or more, and still more preferably 23 $kJ/m^2$ or more. In the case of a polyether polyamide resin composition having the polyether polyamide resin (A2) blended therein, the impact strength is preferably 20.5 $kJ/m^2$ or more, and more preferably 23 $kJ/cm^2$ or more.

From the viewpoints of flexibility and mechanical strength, a tensile modulus (in conformity with ISO527) of the polyether polyamide resin composition is preferably 13 GPa or more, more preferably 15 GPa or more, still more preferably 16 GPa or more, and especially preferably 16.5 GPa or more.

[Molded article]

The polyether polyamide resin composition of the present invention can be molded into molded articles of various embodiments by a conventionally known molding method. As the molding method, for example, molding methods such as injection molding, blow molding, extrusion molding, compression molding, vacuum molding, press molding, direct blow molding, rotational molding, sandwich molding, two-color molding, etc. can be exemplified.

The molded article including the polyether polyamide resin composition of the present invention has both excellent heat stability and heat aging resistance and is suitable as automobile parts, electric parts, electronic parts, and the like. In particular, as the molded article composed of the polyether polyamide resin composition, hoses, tubes, or metal covering materials are preferable.

EXAMPLES

The present invention is hereunder described in more detail by reference to the Examples, but it should not be construed that the present invention is limited thereto. Incidentally, in the present Examples, various measurements were performed by the following methods.

[Evaluation methods]

Relative viscosity, number average molecular weight, glass transition temperature, crystallization temperature, melting point, moisture content, density, and phosphorus atom concentration of the polyether polyamide resin (A1) or (A2) used in each of the Examples and Comparative Examples as well as moisture content, phosphorus atom concentration, Charpy impact strength, and tensile modulus of each of polyether polyamide resin compositions obtained in the following methods were measured as follows.

(1) Relative viscosity (η)

0.2 g of a sample was accurately weighed and dissolved in 20 mL of 96% sulfuric acid at from 20 to 30°C with stirring. After completely dissolving, 5 mL of the solution was rapidly taken into a Cannon-Fenske viscometer, allowed to stand in a thermostat at 25°C for 10 minutes, and then measured for a fall time (t). In addition, a fall time ($t_0$) of the 96% sulfuric acid itself was similarly measured. A relative viscosity was calculated from t and to according to the following equation.

$$\text{Relative viscosity} = t/t_0$$

(2) Number average molecular weight (Mn)

First of all, a sample was dissolved in a phenol/ethanol mixed solvent and a benzyl alcohol solvent, respectively, and a terminal carboxyl group concentration and a terminal amino group concentration were determined by means of neutralization titration in hydrochloric acid and a sodium hydroxide aqueous solution, respectively. A number average molecular weight was determined from quantitative values of the terminal amino group concentration and the terminal carboxyl group concentration according to the following equation.

$$\text{Number average molecular weight} = 2 \times 1{,}000{,}000/([NH_2] + [COOH])$$

$[NH_2]$: Terminal amino group concentration (μeq/g)
[COOH]: Terminal carboxyl group concentration (μeq/g)

(3) Differential scanning calorimetry (glass transition temperature, crystallization temperature, and melting point)

The differential scanning calorimetry was performed in conformity with JIS K7121 and K7122. By using a differential scanning calorimeter (a trade name: DSC-60, manufactured by Shimadzu Corporation), each sample was charged in a DSC measurement pan and subjected to a pre-treatment of raising the temperature to 260°C in a nitrogen atmosphere at a temperature rise rate of 10°C/min and rapid cooling, followed by performing the measurement. As for the measurement condition, the temperature was raised at a rate of 10°C/min, and after keeping at 260°C for 5 minutes, the temperature was dropped to 100°C at a rate of -5°C/min, thereby measuring a glass transition temperature Tg, a crystallization temperature Tch, and a melting point Tm.

(4) Moisture content

The moisture content was measured at a temperature that is lower by 5°C than the melting point of the polyether polyamide resin for 30 minutes by the Karl Fischer's method by using pellets of the polyether polyamide resin (A1) or (A2) or the polyether polyamide resin composition.

(5) Density

The density of the polyether polyamide resin (A1) or (A2) was measured in conformity with JIS K7112, Method A (water displacement method).

(6) Phosphorus atom concentration

0.5 g of the polyether polyamide resin (A1) or (A2) or the polyether polyamide resin composition was weighed,

to which was then added 20 mL of concentrated sulfuric acid, and the mixture was wet decomposed on a heater. After cooling, 5 mL of hydrogen peroxide was added, and the mixture was heated on a heater and concentrated until the whole amount reached 2 to 3 mL. The resultant was again cooled to make to 500 mL with pure water. The quantitative analysis was performed by using IRIS/IP, manufactured by Thermo Jarrell Ash Corporation at a wavelength of 213.618 nm by means of high frequency inductive-coupling plasma (ICP) emission analysis.

Incidentally, in the present invention, the phosphorus atom concentration in the polyether polyamide resin composition means a concentration of the phosphorus atom remaining in the organic component after removing the inorganic component such as the filler (B), etc. from the polyether polyamide resin composition.

(7) Charpy impact strength

By using the polyether polyamide resin composition, an ISO test piece was fabricated with an injection molding machine 100T, manufactured by Fanuc Corporation under a condition at a cylinder temperature of 280°C and a die temperature of 15°C, followed by carrying out the evaluation in conformity with ISO179 (unit: $kJ/m^2$).

(8) Tensile modulus

By using the polyether polyamide resin composition, an ISO test piece was fabricated with an injection molding machine SE130-DU, manufactured by Sumitomo Heavy Industries, Ltd. under a condition at a cylinder temperature of 280°C and a die temperature of 15°C, followed by carrying out the evaluation in conformity with ISO527 (unit: GPa).

[Raw materials]

The following glass fiber was used as the filler (B).
Glass fiber:

A trade name: "T-275H" for a chopped strand, manufactured by Nippon Electric Glass Co., Ltd.

In addition, the following materials were used as additives.
Carbodiimide compound (C):

Alicyclic polycarbodiimide compound
A trade name: "CARBODILITE LA-1", manufactured by Nisshinbo Holdings Inc.

This carbodiimide compound is hereinafter sometimes abbreviated as "carbodiimide".
Stabilizer (D):

Aromatic secondary amine-type stabilizer
N,N'-Di-2-naphthyl-p-phenylenediamine
A trade name: "NOCRAC White", manufactured by Ouchi Shinko Chemical Industrial Co., Ltd.

This is hereinafter sometimes abbreviated as "stabilizer".
Crystal nucleating agent - finely divided talc:

A trade name: "MICRON WHITE #5000S", manufactured by Hayashi-Kasei Co., Ltd., average particle diameter: 2.8 μm

<Production Example 1>

In a reaction vessel having a capacity of about 50 L and equipped with a stirrer, a nitrogen gas inlet, and a condensed water discharge port, 1,169.20 g of adipic acid, 10.47 g of sodium hypophosphite monohydrate, and 7.294 g of sodium acetate were charged, and after thoroughly purging the inside of the vessel with nitrogen, the mixture was melted at 170°C while feeding a small amount of a nitrogen gas.

A mixed liquid of 1,078.70 g of, as the m-xylylenediamine (a-2), 1,3-bis(aminomethyl)benzene [m-xylylenediamine: MXDA], manufactured by Mitsubishi Gas Chemical Company, Inc. and 800.00 g of, as the polyether diamine compound (a1-1), a polyether diamine [a trade name: XTJ-542, manufactured by Huntsman Corporation, USA; according to the catalog of Huntsman Corporation, USA, this compound is represented by the following general formula (1-1), wherein an approximate figure of (x1 + z1) is 6.0, and an approximate figure of y1 is 9.0, and has a number average

molecular weight of 1,000] was added dropwise thereto while gradually raising the temperature to 260°C, and the mixture was polymerized for about 2 hours to obtain a polyether polyamide resin (A1).

Results of the above-described evaluation methods regarding the polyether polyamide resin (A1) are shown in Table 1.

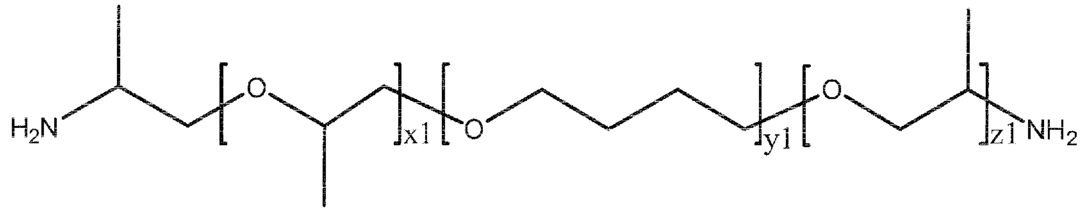

(1-1)

[Example 1-1]

Other respective components were weighed such that the polyether polyamide resin (A1) obtained in the above-described Production Example 1 had a composition shown in Table 1; the components other than glass fiber were blended with a tumbler; the blend was inputted from a base part of a twin-screw extruder ("TEM37BS", manufactured by Toshiba Machine Co., Ltd.) and melted; and thereafter, the glass fiber was subjected to side-feeding. A preset temperature of the extruder was set up to 280°C until a side-feeding part and 260°C from the side-feeding part, and the resultant was extruded and pelletized, thereby fabricating pellets of a polyether polyamide resin composition.

The resulting pellets of a polyether polyamide resin composition were dried by dehumidified air at 80°C (dew point - 40°C) for 8 hours.

Results of the above-described evaluation methods regarding this polyether polyamide resin composition are shown in Table 1.

[Example 1-2]

The polyether polyamide resin (A1) was obtained in the same manner as that in Production Example 1, except that in Production Example 1, a mixture of m-xylylenediamine (MXDA) and p-xylylenediamine (PXDA) in a mixing proportion shown in Table 1 was used as the xylylenediamine (a-2); a molar ratio of sodium acetate/sodium hypophosphite monohydrate was set up to 0.90; and the addition amount of the sodium hypophosphite monohydrate was increased so as to have a phosphorus atom concentration shown in Table 1.

Pellets of a polyether polyamide resin composition were obtained in the same manner as that in Example 1-1, except that the resulting polyether polyamide resin was used, and the blending amounts of the respective components were set up to those shown in Table 1.

Results of the above-described evaluation methods regarding this polyether polyamide resin composition are shown in Table 1.

In addition, this polyether polyamide resin composition was used, and it was noted from a tensile strength retention rate measured by the following method that the resulting resin composition was excellent in heat aging resistance on the occasion of storing at 120°C.

(Measurement of tensile strength retention rate)

By using the resulting polyether polyamide resin composition, an ISO test piece was fabricated with an injection molding machine SE130-DU, manufactured by Sumitomo Heavy Industries, Ltd. under a condition at a cylinder temperature of 280°C and a die temperature of 15°C, and the above-described ISO test piece was subjected to a heat treatment with a hot air dryer at 120°C for 72 hours. Subsequently, the test piece before and after the heat treatment was subjected to a tensile test, thereby determining a breaking stress (MPa). Incidentally, the measurement was carried out using a tensile tester (strograph, manufactured by Toyo Seiki Seisaku-sho, Ltd.) at a measurement temperature of 23°C and a measurement humidity of 50% RH. A ratio in the breaking stress before and after the heat treatment was defined as the tensile strength retention rate, and the tensile strength retention rate (%) was calculated according to the following equation; and as a result, it was noted that the test piece was high in the tensile strength retention rate and excellent in the heat aging resistance.

Tensile strength retention rate (%) = [{Breaking stress of molded piece after heat treatment at 120°C for 72 hours (MPa)}/{Breaking stress of molded piece before heat treatment at 120°C for 72 hours (MPa)}] $\times$ 100

[Examples 1-3 to 1-7]

The polyether polyamide resins (A1) were obtained in the same manner as that in Production Example 1, except that in Production Example 1, a mixture of m-xylylenediamine (MXDA) and p-xylylenediamine (PXDA) in a mixing proportion shown in Table 1 was used as the xylylenediamine (a-2); sebacic acid or adipic acid in a proportion shown in Table 1 was used as the dicarboxylic acid component; a molar ratio of sodium acetate/sodium hypophosphite monohydrate was set up to 0.90; and the addition amount of the sodium hypophosphite monohydrate was changed so as to have a phosphorus atom concentration shown in Table 1.

Pellets of a polyether polyamide resin composition were obtained in the same manner as that in Example 1-1, except that each of the resulting polyether polyamide resins (A1) was used, and the blending amounts of the respective components were changed to those shown in Table 1.

Results of the above-described evaluation methods regarding this polyether polyamide resin composition are shown in Table 1.

[Comparative Example 1-1]

Pellets of a polyether polyamide resin were obtained in the same manner as that in Example 1-4, except that the glass fiber was not blended.

Results of the above-described evaluation methods regarding this polyether polyamide resin are shown in Table 1.

[Comparative Examples 1-2 to 1-7]

Polyamide resins were obtained in the same manner as that in Production Example 1, except that proportions of m-xylylenediamine (MXDA), p-xylylenediamine (PXDA), and sebacic acid or adipic acid were changed to the amounts shown in the following Table 2; similar to the above-described Production Example, a molar ratio of sodium acetate/sodium hypophosphite monohydrate was set up to 0.90; and the addition amount of the sodium hypophosphite monohydrate was changed.

Polyamide resin compositions were produced in the same manner as that in the above-described Examples by using each of the resulting polyamide resins and setting up the blending amounts of the respective components to the amounts shown in the following Table 2, followed by performing the various evaluations.

Evaluation results are shown in Table 2.

Table 1

| | | | | | Examples | | | | | | | Comparative Examples |
|---|---|---|---|---|---|---|---|---|---|---|---|---|
| | | | | | 1-1 | 1-2 | 1-3 | 1-4 | 1-5 | 1-6 | 1-7 | 1-1 |
| Resin composition | Polyether polyamide resin (A1) | Diamine component (Molar ratio) | (a1-1) | XTJ-542 | 1 | 20 | 10 | 10 | 0.5 | 10 | 10 | 10 |
| | | | (a-2) | MXDA + PXDA | 99 | 80 | 90 | 90 | 99.5 | 90 | 90 | 90 |
| | | | | (MXDA/PXDA) molar ratio | 100/0 | 70/30 | 70/30 | 70/30 | 70/30 | 100/0 | 30/70 | 70/30 |
| | | Dicarboxylic acid | Adipic acid | | 100 | 100 | 100 | - | - | - | - | - |
| | | (Molar ratio) | Sebacic acid | | - | - | - | 100 | 100 | 100 | 100 | 100 |
| | Filler (B) | Glass fiber | | Parts by mass * | 50 | 50 | 50 | 50 | 50 | 100 | 100 | - |
| | Carbodiimide compound (C) | | | Parts by mass * | - | - | - | - | - | - | 0.5 | - |
| | Stabilizer (D) | | | Parts by mass * | - | 0.5 | - | - | - | - | - | - |
| | Crystal nucleating agent (finely divided talc) | | | Parts by mass * | - | 0.5 | - | - | 0.5 | 0.5 | - | - |

(continued)

| | | | | Examples | | | | | | | Comparative Examples |
|---|---|---|---|---|---|---|---|---|---|---|---|
| | | | | 1-1 | 1-2 | 1-3 | 1-4 | 1-5 | 1-6 | 1-7 | 1-1 |
| Physical properties | Physical properties of polyether polyamide resin (A1) | Relative viscosity | | 1.77 | 1.27 | 1.36 | 1.31 | 1.93 | 1.29 | 1.31 | 1.31 |
| | | Number average molecular weight | | 9,930 | 11,700 | 12,100 | 10,030 | 14,200 | 12,500 | 10,000 | 10,030 |
| | | Glass transition temperature | °C | 81.5 | 77.7 | 79.3 | 12.9 | 60.7 | 29.2 | 8.4 | 12.9 |
| | | Crystallization temperature | °C | 123.5 | 102.9 | 107.1 | 69.5 | 97.6 | 58.0 | 84.8 | 69.5 |
| | | Melting point | °C | 235.7 | 248.6 | 251.4 | 204.4 | 212.0 | 185.0 | 231.1 | 204.4 |
| | | Moisture content | % by mass | 0.15 | 0.15 | 0.15 | 0.15 | 0.15 | 0.15 | 0.15 | 0.15 |
| | | Density | $g/cm^3$ | 1.21 | 1.15 | 1.17 | 1.11 | 1.13 | 1.11 | 1.10 | 1.11 |
| | | Phosphorus atom concentration | ppm | 150 | 50 | 150 | 150 | 150 | 150 | 1000 | 150 |
| | Physical properties of resin composition | Moisture content | % by mass | 0.05 | 0.08 | 0.05 | 0.06 | 0.05 | 0.06 | 0.04 | 0.06 |
| | | Phosphorus atom concentration | ppm | 150 | 50 | 150 | 150 | 150 | 150 | 1000 | 150 |
| | | Charpy impact strength | $kJ/m^2$ | 21.5 | 30.3 | 29.2 | 26.7 | 20.4 | 24.3 | 23.3 | 33.5 |
| | | Tensile modulus | GPa | 18.5 | 16.9 | 17.0 | 17.7 | 19.0 | 17.8 | 17.3 | 0.71 |

*Parts by mass: Blending amount based on 100 parts by mass of the polyether polyamide resin (A1) (parts by mass)

Table 2

| | | | | | Comparative Examples | | | | | |
|---|---|---|---|---|---|---|---|---|---|---|
| | | | | | 1-2 | 1-3 | 1-4 | 1-5 | 1-6 | 1-7 |
| Resin composition | Polyamide resin | Diamine component (Molar ratio) | (a-2) | MXDA + PXDA | 100 | 100 | 100 | 100 | 100 | 100 |
| | | | | (MXDA/PXDA) molar ratio | 100/0 | 70/30 | 100/0 | 70/30 | 100/0 | 30/70 |
| | | Dicarboxylic acid component (Molar ratio) | Adipic acid | | 100 | 100 | - | - | - | - |
| | | | Sebacic acid | | - | - | 100 | 100 | 100 | 100 |
| | Filler (B) | Glass fiber | | Parts by mass * | 50 | 50 | 50 | 50 | 100 | 100 |
| | Carbodiimide compound (C) | | | Parts by mass * | - | - | - | - | - | 0.5 |
| | Stabilizer (D) | | | Parts by mass * | - | - | - | - | - | - |
| | Crystal nucleating agent (finely divided talc) | | | Parts by mass * | - | - | - | - | 0.5 | - |
| Physical properties | Physical properties of polyamide resin | Relative viscosity | | | 2.1 | 2.1 | 2.3 | 2.2 | 2.3 | 2.2 |
| | | Number average molecular weight | | | 15,500 | 15,000 | 18,100 | 16,800 | 18,100 | 17,100 |
| | | Glass transition temperature | | °C | 85.2 | 89.1 | 60 | 64 | 60 | 70 |
| | | Crystallization temperature | | °C | 155.4 | 72.3 | 119 | 104 | 119 | 96 |
| | | Melting point | | °C | 237.4 | 260.8 | 191 | 212 | 191 | 243 |
| | | Moisture content | | % by mass | 0.15 | 0.15 | 0.15 | 0.15 | 0.15 | 0.15 |
| | | Density | | $g/cm^3$ | 1.22 | 1.21 | 1.13 | 1.13 | 1.13 | 1.13 |
| | | Phosphorus atom concentration | | ppm | 150 | 150 | 150 | 150 | 150 | 150 |
| | Physical properties of resin composition | Moisture content | | % by mass | 0.05 | 0.05 | 0.05 | 0.05 | 0.05 | 0.05 |
| | | Phosphorus atom concentration | | ppm | 150 | 150 | 150 | 150 | 150 | 150 |
| | | Charpy impact strength | | $kJ/m^2$ | 20.0 | 20.0 | 20.0 | 20.0 | 18.0 | 18.0 |
| | | Tensile modulus | | GPa | 19.3 | 19.5 | 19.0 | 19.2 | 21.0 | 22.0 |

It is noted from Tables 1 and 2 that in view of the fact that the resin compositions of Examples 1-1 to 1-7 are excellent in the impact strength while having a favorable tensile modulus, the polyether polyamide resin composition of the present invention is a material which is excellent in impact strength and tensile modulus, strong in strength, and high in toughness. On the other hand, it is noted that the resin compositions of Comparative Examples 1-1 to 1-7 are a brittle material because although they are favorable in tensile modulus, they are low in impact strength.

<Production Example 2>

In a reaction vessel having a capacity of about 50 L and equipped with a stirrer, a nitrogen gas inlet, and a condensed water discharge port, 10,000 g of adipic acid, 9.99 g of sodium hypophosphite monohydrate, and 6.96 g of sodium acetate were charged, and after thoroughly purging the inside of the vessel with nitrogen, the mixture was melted at 170°C while feeding a small amount of a nitrogen gas.

A mixed liquid of 8,853.8 g of m-xylylenediamine (MXDA) (manufactured by Mitsubishi Gas Chemical Company, Inc.) and 3,079.2 g of a polyether diamine (a trade name: ED-900, available from Huntsman Corporation, USA; according to the catalog of Huntsman Corporation, USA, this compound is represented by the following general formula (2-1), wherein an approximate figure of (x2 + z2) is 6.0, and an approximate figure of y2 is 12.5, and has a number average molecular weight of 900) was added dropwise thereto while gradually raising the temperature to 260°C, and the mixture was polymerized for about 2 hours to obtain a polyether polyamide resin (A2).

Results of the above-described evaluation methods regarding the polyether polyamide resin (A2) are shown in Table 3.

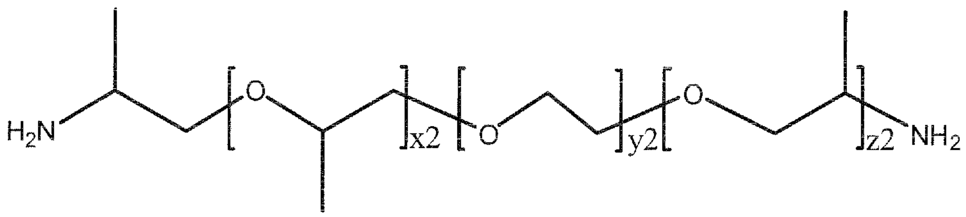

(2-1)

[Example 2-1]

Other respective components were weighed such that the polyether polyamide resin (A2) obtained by the above-described Production Example 2 had a composition shown in Table 3; the components other than glass fiber were blended with a tumbler; the blend was inputted from a base part of a twin-screw extruder ("TEM37BS", manufactured by Toshiba Machine Co., Ltd.) and melted; and thereafter, the glass fiber was subjected to side-feeding. A preset temperature of the extruder was set up to 280°C until a side-feeding part and 260°C from the side-feeding part, and the resultant was extruded and pelletized, thereby fabricating pellets of a polyether polyamide resin composition.

The resulting pellets of a polyether polyamide resin composition were dried by dehumidified air at 80°C (dew point - 40°C) for 8 hours.

Results of the above-described evaluation methods regarding this polyether polyamide resin composition are shown in Table 3.

[Example 2-2]

The polyether polyamide resin (A2) was obtained in the same manner as that in Production Example 2, except that in Production Example 2, proportions of the m-xylylenediamine (MXDA) and the polyether diamine (a trade name: ED-900) were changed to those shown in Table 3; a molar ratio of sodium acetate/sodium hypophosphite monohydrate was set up to 0.90; and the addition amount of the sodium hypophosphite monohydrate was increased so as to have a phosphorus atom concentration shown in Table 3.

Pellets of a polyether polyamide resin composition were obtained in the same manner as that in Example 2-1, except that the resulting polyether polyamide resin was used, and the blending amounts of the respective components were set up to those shown in Table 3.

Results of the above-described evaluation methods regarding this polyether polyamide resin composition are shown in Table 3.

In addition, this polyether polyamide resin composition was used, and it was noted from a tensile strength retention rate measured by the following method that the resulting resin composition was excellent in heat aging resistance on the occasion of storing at 120°C.

(Measurement of tensile strength retention rate)

By using the resulting polyether polyamide resin composition, an ISO test piece was fabricated with an injection molding machine SE130-DU, manufactured by Sumitomo Heavy Industries, Ltd. under a condition at a cylinder temperature of 280°C and a die temperature of 15°C, and the above-described ISO test piece was subjected to a heat treatment with a hot air dryer at 120°C for 72 hours. Subsequently, the test piece before and after the heat treatment was subjected to a tensile test, thereby determining a breaking stress (MPa). Incidentally, the measurement was carried out using a tensile tester (strograph, manufactured by Toyo Seiki Seisaku-sho, Ltd.) at a measurement temperature of 23°C and a measurement humidity of 50% RH. A ratio in the breaking stress before and after the heat treatment was defined as the tensile strength retention rate, and the tensile strength retention rate (%) was calculated according to the following equation; and as a result, it was noted that the test piece was high in the tensile strength retention rate and excellent in the heat aging resistance.

$$\text{Tensile strength retention rate (\%)} = [\{\text{Breaking stress of molded piece after heat treatment at 120°C for 72 hours (MPa)}\}/\{\text{Breaking stress of molded piece before heat treatment at 120°C for 72 hours (MPa)}\}] \times 100$$

[Example 2-3]

The polyether polyamide resin (A2) was obtained in the same manner as that in Production Example 2, except that in Production Example 2, a mixture of m-xylylenediamine (MXDA) and p-xylylenediamine (PXDA) in a mixing proportion shown in Table 3 was used as the xylylenediamine (a-2); and sebacic acid was used as the dicarboxylic acid component in place of the adipic acid in a proportion shown in Table 3.
Pellets of a polyether polyamide resin composition were obtained in the same manner as that in Example 2-1, except that the resulting polyether polyamide resin (A2) was used, and the blending amounts of the respective components were changed to those shown in Table 3.
Results of the above-described evaluation methods regarding this polyether polyamide resin composition are shown in Table 3.

[Example 2-4]

The polyether polyamide resin (A2) was obtained in the same manner as that in Production Example 2, except that in Production Example 2, a mixture of m-xylylenediamine (MXDA) and p-xylylenediamine (PXDA) in a mixing proportion shown in Table 3 was used as the xylylenediamine (a-2).
Pellets of a polyether polyamide resin composition were obtained in the same manner as that in Example 2-1, except that the resulting polyether polyamide resin was used, and the blending amounts of the respective components were set up to those shown in Table 3.
Results of the above-described evaluation methods regarding this polyether polyamide resin composition are shown in Table 3.

[Examples 2-5 to 2-7]

The polyether polyamide resins (A2) were obtained in the same manner as that in Production Example 2, except that in Production Example 2, ED-600 (a trade name; available from Huntsman Corporation, USA; according to the catalog of Huntsman Corporation, USA, an approximate figure of (x2 + z2) in the foregoing general formula (2) is 3.0, and an approximate figure of y2 is 9.0, and has a number average molecular weight of 600) in a proportion shown in Table 3 was used as the polyether diamine (a2-1) in place of ED-900; a mixture of m-xylylenediamine (MXDA) and p-xylylenediamine (PXDA) in a mixing proportion shown in Table 3 was used as the xylylenediamine (a-2); sebacic acid was used as the dicarboxylic acid component in place of the adipic acid; and the addition amount of the sodium hypophosphite monohydrate was changed so as to have a phosphorus atom concentration shown in Table 3.
Pellets of a polyether polyamide resin composition were obtained in the same manner as that in Example 2-1, except that the resulting polyether polyamide resin (A2) was used, and the blending amounts of the respective components were changed to those shown in Table 3.
Results of the above-described evaluation methods regarding each of the polyether polyamide resin compositions are shown in Table 3.

[Comparative Example 2-1]

Pellets of a polyether polyamide resin were obtained in the same manner as that in Example 2-3, except that the glass fiber was not blended.

Results of the above-described evaluation methods regarding this polyether polyamide resin are shown in Table 3.

[Comparative Examples 2-2 to 2-6]

Polyether polyamide resins were obtained in the same manner as that in Production Example 2, except that proportions of m-xylylenediamine (a-2), p-xylylenediamine (a-2), and sebacic acid or adipic acid were set up to the amounts shown in the following Table 4; similar to the above-described Production Example, a molar ratio of sodium acetate/sodium hypophosphite monohydrate was set up to 0.90; and the addition amount of the sodium hypophosphite monohydrate was changed.

Pellets of a polyether polyamide resin composition were obtained in the same manner as that in the above-described Examples, except that each of the resulting polyether polyamide resins was used, and the blending amounts of the respective components were set up to those shown in Table 4.

Results of the above-described evaluation methods regarding each of the polyether polyamide resin compositions are shown in Table 4.

Table 3

| | | | | | Examples | | | | | | | Comparative Examples |
|---|---|---|---|---|---|---|---|---|---|---|---|---|
| | | | | | 2-1 | 2-2 | 2-3 | 2-4 | 2-5 | 2-6 | 2-7 | 2-1 |
| Resin composition | Polyether polyamide resin (A2) | Diamine component (Molar ratio) | (a2-1) | ED-900 | 5 | 10 | 10 | 5 | - | - | - | 10 |
| | | | | ED-600 | - | - | - | - | 1 | 5 | 10 | - |
| | | | (a-2) | MXDA + PXDA | 95 | 90 | 90 | 95 | 99 | 95 | 90 | 90 |
| | | | | (MXDA/PXDA) molar ratio | 100/0 | 100/0 | 70/30 | 70/30 | 70/30 | 100/0 | 70/30 | 70/30 |
| | | Dicarboxylic acid component (Molar ratio) | Adipic acid | | 100 | 100 | - | 100 | - | - | - | - |
| | | | Sebacic acid | | - | - | 100 | - | 100 | 100 | 100 | 100 |
| | Filler (B) | Glass fiber | | Parts by mass * | 50 | 50 | 50 | 50 | 50 | 100 | 100 | - |
| | Carbodiimide compound (C) | | | Parts by mass * | - | - | - | - | 0.5 | - | 0.5 | - |
| | Stabilizer (D) | | | Parts by mass * | - | 0.5 | - | - | - | - | - | - |
| | Crystal nucleating agent (finely divided talc) | | | Parts by mass * | - | 0.5 | - | - | 0.5 | 0.5 | - | - |

(continued)

| | | | | Examples | | | | | | | Comparative Examples |
|---|---|---|---|---|---|---|---|---|---|---|---|
| | | | | 2-1 | 2-2 | 2-3 | 2-4 | 2-5 | 2-6 | 2-7 | 2-1 |
| Physical properties | Physical properties of polyamide resin (A2) | Relative viscosity | | 1.45 | 1.34 | 1.36 | 1.48 | 1.86 | 1.62 | 1.36 | 1.36 |
| | | Number average molecular weight | | 15,450 | 16,800 | 11,900 | 11,000 | 15,300 | 15,000 | 14,700 | 11,900 |
| | | Glass transition temperature | °C | 57.7 | 42.1 | 16.9 | 27.6 | 60.4 | 60.1 | 26.8 | 16.9 |
| | | Crystallization temperature | °C | 111.8 | 89.7 | 52.9 | 72.8 | 99.0 | 105.4 | 67.8 | 52.9 |
| | | Melting point | °C | 232.8 | 227.5 | 201.9 | 207.6 | 211.7 | 226.5 | 202.1 | 201.9 |
| | | Moisture content | % by mass | 0.15 | 0.15 | 0.15 | 0.15 | 0.15 | 0.15 | 0.15 | 0.15 |
| | | Density | $g/cm^3$ | 1.18 | 1.15 | 1.13 | 1.15 | 1.20 | 1.16 | 1.11 | 1.13 |
| | | Phosphorus atom concentration | ppm | 150 | 50 | 150 | 150 | 150 | 150 | 1000 | 150 |
| | Physical properties of resin composition | Moisture content | % by mass | 0.07 | 0.07 | 0.08 | 0.07 | 0.05 | 0.06 | 0.04 | 0.08 |
| | | Phosphorus atom concentration | ppm | 150 | 50 | 150 | 150 | 150 | 150 | 1000 | 150 |
| | | Charpy impact strength | $kJ/m^2$ | 24.5 | 30.9 | 30.6 | 24.8 | 20.9 | 25.5 | 30.4 | 37.3 |
| | | Tensile modulus | GPa | 18.3 | 16.5 | 16.7 | 17.0 | 18.8 | 17.8 | 16.8 | 0.59 |

*Parts by mass: Blending amount based on 100 parts by mass of the polyether polyamide resin (A2) (parts by mass)

Table 4

| | | | | | Comparative Examples | | | | |
|---|---|---|---|---|---|---|---|---|---|
| | | | | | 2-2 | 2-3 | 2-4 | 2-5 | 2-6 |
| Resin composition | Polyamide resin | Diamine component (Molar ratio) | (a-2) | MXDA + PXDA | 100 | 100 | 100 | 100 | 100 |
| | | | | (MXDA/PXDA) molar ratio | 100/0 | 70/30 | 70/30 | 100/0 | 70/30 |
| | | Dicarboxylic acid component (Molar ratio) | Adipic acid | | 100 | 100 | - | - | - |
| | | | Sebacic acid | | - | - | 100 | 100 | 100 |
| | Filler (B) | Glass fiber | | Parts by mass * | 50 | 50 | 50 | 50 | 100 |
| | Carbodiimide compound (C) | | | Parts by mass * | - | - | 0.5 | - | 0.5 |
| | Stabilizer (D) | | | Parts by mass * | - | - | - | - | - |
| | Crystal nucleating agent (finely divided talc) | | | Parts by mass * | - | - | 0.5 | 0.5 | - |
| Physical properties | Physical properties of polyamide resin | Relative viscosity | | | 2.1 | 2.1 | 2.2 | 2.3 | 2.2 |
| | | Number average molecular weight | | | 15,500 | 15,000 | 16,800 | 18,100 | 16,800 |
| | | Glass transition temperature | | °C | 85.2 | 89.1 | 64 | 60 | 64 |
| | | Crystallization temperature | | °C | 155.4 | 72.3 | 104 | 119 | 104 |
| | | Melting point | | °C | 237.4 | 260.8 | 212 | 191 | 212 |
| | | Moisture content | | % by mass | 0.15 | 0.15 | 0.15 | 0.15 | 0.15 |
| | | Density | | $g/cm^3$ | 1.22 | 1.21 | 1.13 | 1.13 | 1.13 |
| | | Phosphorus atom concentration | | ppm | 150 | 150 | 150 | 150 | 150 |
| | Physical properties of resin composition | Moisture content | | % by mass | 0.05 | 0.06 | 0.05 | 0.05 | 0.05 |
| | | Phosphorus atom concentration | | ppm | 150 | 150 | 150 | 150 | 150 |
| | | Charpy impact strength | | $kJ/m^2$ | 20.0 | 20.0 | 20.0 | 18.0 | 17.8 |
| | | Tensile modulus | | GPa | 19.3 | 19.5 | 19.2 | 21.0 | 21.3 |

*Parts by mass: Blending amount based on 100 parts by mass of the polyamide resin (parts by mass)

It is noted from Tables 3 and 4 that in view of the fact that the resin compositions of Examples 2-1 to 2-7 are excellent in the impact strength while having a favorable tensile modulus, the polyether polyamide resin composition of the present invention is a material which is excellent in impact strength and tensile modulus, strong in strength, and high in toughness. On the other hand, it is noted that the resin compositions of Comparative Examples 2-1 to 2-6 are a brittle material because although they are favorable in tensile modulus, they are low in impact strength.

INDUSTRIAL APPLICABILITY

The polyether polyamide resin composition of the present invention is a xylylene-based polyamide resin-based composition having strong strength and high toughness, and the molded article obtained from the polyether polyamide resin composition of the present invention is sufficient in a degree of crystallization and excellent in mechanical physical properties such as impact resistance, etc. For that reason, the polyether polyamide resin composition of the present invention can be suitably used for various industrial parts, gears and connectors of mechanical and electrical precision instruments, fuel tubes around an automobile engine, connector parts, sliding parts, belts, hoses, electric parts and electronic parts such as silent gears, etc., sporting goods, and the like.

## Claims

1. A polyether polyamide resin composition comprising 100 parts by mass of a polyether polyamide resin (A1) in which a diamine constituent unit thereof is derived from a polyether diamine compound (a1-1) represented by the following general formula (1) and a xylylenediamine (a-2), and a dicarboxylic acid constituent unit thereof is derived from an $\alpha,\omega$-linear aliphatic dicarboxylic acid having from 4 to 20 carbon atoms, having blended therein from 15 to 200 parts by mass of a filler (B):

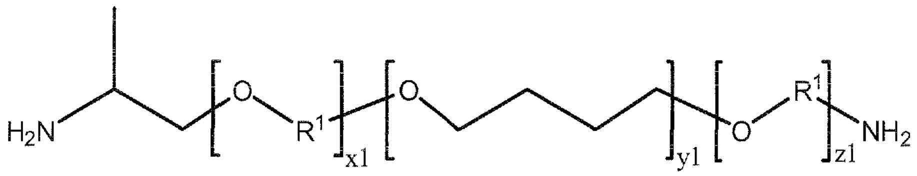
(1)

wherein (x1 + z1) is from 1 to 30; y1 is from 1 to 50; and $R^1$ represents a propylene group.

2. The polyether polyamide resin composition according to claim 1, wherein the filler (B) is at least one member selected from kaolinite, silica, calcium carbonate, magnesium carbonate, calcium sulfate, magnesium sulfate, alumina, glass bead, carbon black, a sulfide, a metal oxide, glass fiber, a whisker, wollastonite, carbon fiber, mineral fiber, alumina fiber, glass flake, mica, talc, clay, graphite, sericite, an aromatic liquid crystalline polyester resin, a wholly aromatic polyamide resin, acrylic fiber, poly(benzimidazole) fiber, kenaf, pulp, hemp pulp, and wood pulp.

3. The polyether polyamide resin composition according to claim 1 or 2, wherein the xylylenediamine (a-2) is m-xylylenediamine, p-xylylenediamine, or a mixture thereof.

4. The polyether polyamide resin composition according to any one of claims 1 to 3, wherein a proportion of the constituent unit derived from the polyether diamine compound (a1-1) in the diamine constituent unit is from 0.1 to 50% by mole.

5. The polyether polyamide resin composition according to any one of claims 1 to 4, wherein the $\alpha,\omega$-aliphatic dicarboxylic acid having from 4 to 20 carbon atoms is at least one member selected from adipic acid, sebacic acid, and a mixture thereof.

6. The polyether polyamide resin composition according to any one of claims 1 to 5, wherein a moisture content of the polyether polyamide resin (A1) is from 0.01 to 0.5% by mass.

7. The polyether polyamide resin composition according to any one of claims 1 to 6, wherein a moisture content of the polyether polyamide resin composition is from 0.01 to 0.1% by mass.

8. The polyether polyamide resin composition according to any one of claims 1 to 7, wherein a density of the polyether

polyamide resin (A1) is from 1.0 to 1.3 g/cm$^3$.

**9.** The polyether polyamide resin composition according to any one of claims 1 to 8, wherein a phosphorus atom concentration of the polyether polyamide resin (A1) is from 50 to 1,000 ppm.

**10.** The polyether polyamide resin composition according to any one of claims 1 to 9, wherein a phosphorus atom concentration of the polyether polyamide resin composition is from 50 to 1,000 ppm.

**11.** The polyether polyamide resin composition according to any one of claims 1 to 10, wherein a carbodiimide compound (C) is further blended in a proportion of from 0.1 to 2 parts by mass based on 100 parts by mass of the polyether polyamide resin (A1).

**12.** The polyether polyamide resin composition according to claim 11, wherein the carbodiimide compound (C) is an aliphatic or alicyclic polycarbodiimide compound.

**13.** The polyether polyamide resin composition according to any one of claims 1 to 12, wherein a stabilizer (D) is further blended in a proportion of from 0.1 to 1 part by mass based on 100 parts by mass of the polyether polyamide resin (A1).

**14.** The polyether polyamide resin composition according to claim 13, wherein the stabilizer (D) is at least one member selected from an amine compound, an organic sulfur compound, a phenol compound, a phosphorus compound, and an inorganic compound.

**15.** A molded article comprising the polyether polyamide resin composition according to any one of claims 1 to 14.

**16.** A polyether polyamide resin composition comprising 100 parts by mass of a polyether polyamide resin (A2) in which a diamine constituent unit thereof is derived from a polyether diamine compound (a2-1) represented by the following general formula (2) and a xylylenediamine (a-2), and a dicarboxylic acid constituent unit thereof is derived from an α,ω-linear aliphatic dicarboxylic acid having from 4 to 20 carbon atoms, having blended therein from 15 to 200 parts by mass of a filler (B):

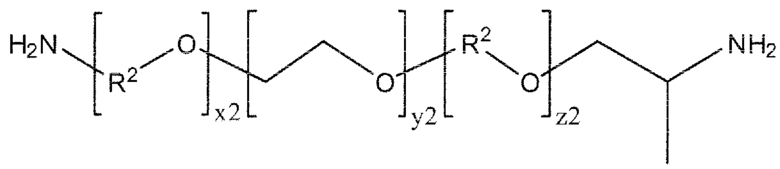

(2)

wherein (x2 + z2) is from 1 to 60; y2 is from 1 to 50; and $R^2$ represents a propylene group.

**17.** The polyether polyamide resin composition according to claim 16, wherein the filler (B) is at least one member selected from kaolinite, silica, calcium carbonate, magnesium carbonate, calcium sulfate, magnesium sulfate, alumina, glass bead, carbon black, a sulfide, a metal oxide, glass fiber, a whisker, wollastonite, carbon fiber, mineral fiber, alumina fiber, glass flake, mica, talc, clay, graphite, sericite, an aromatic liquid crystalline polyester resin, a wholly aromatic polyamide resin, acrylic fiber, poly(benzimidazole) fiber, kenaf, pulp, hemp pulp, and wood pulp.

**18.** The polyether polyamide resin composition according to claim 16 or 17, wherein the xylylenediamine (a-2) is m-xylylenediamine, p-xylylenediamine, or a mixture thereof.

**19.** The polyether polyamide resin composition according to any one of claims 16 to 18, wherein a proportion of the constituent unit derived from the polyether diamine compound (a2-1) in the diamine constituent unit is from 0.1 to 50% by mole.

**20.** The polyether polyamide resin composition according to any one of claims 16 to 19, wherein the α,ω-linear aliphatic dicarboxylic acid having from 4 to 20 carbon atoms is at least one member selected from adipic acid, sebacic acid, and a mixture thereof.

**21.** The polyether polyamide resin composition according to any one of claims 16 to 20, wherein a moisture content of the polyether polyamide resin (A2) is from 0.01 to 0.5% by mass.

**22.** The polyether polyamide resin composition according to any one of claims 16 to 21, wherein a moisture content of the polyether polyamide resin composition is from 0.01 to 0.1% by mass.

**23.** The polyether polyamide resin composition according to any one of claims 16 to 22, wherein a density of the polyether polyamide resin (A2) is from 1.00 to 1.25 g/$cm^3$.

**24.** The polyether polyamide resin composition according to any one of claims 16 to 23, wherein a phosphorus atom concentration of the polyether polyamide resin (A2) is from 50 to 1,000 ppm.

**25.** The polyether polyamide resin composition according to any one of claims 16 to 24, wherein a phosphorus atom concentration of the polyether polyamide resin composition is from 50 to 1,000 ppm.

**26.** The polyether polyamide resin composition according to any one of claims 16 to 25, wherein a carbodiimide compound (C) is further blended in a proportion of from 0.1 to 2 parts by mass based on 100 parts by mass of the polyether polyamide resin (A2).

**27.** The polyether polyamide resin composition according to claim 26, wherein the carbodiimide compound (C) is an aliphatic or alicyclic polycarbodiimide compound.

**28.** The polyether polyamide resin composition according to any one of claims 16 to 27, wherein a stabilizer (D) is further blended in a proportion of from 0.1 to 1 part by mass based on 100 parts by mass of the polyether polyamide resin (A2).

**29.** The polyether polyamide resin composition according to claim 28, wherein the stabilizer (D) is at least one member selected from an aromatic secondary amine compound, an organic sulfur compound, a phenol compound, a phosphorus compound, and an inorganic compound.

**30.** A molded article comprising the polyether polyamide resin composition according to any one of claims 16 to 29.

## INTERNATIONAL SEARCH REPORT

International application No.
PCT/JP2013/071837

A. CLASSIFICATION OF SUBJECT MATTER
*C08L77/06*(2006.01)i, *C08G69/26*(2006.01)i, *C08K3/00*(2006.01)i, *C08K5/29*(2006.01)i

According to International Patent Classification (IPC) or to both national classification and IPC

B. FIELDS SEARCHED

Minimum documentation searched (classification system followed by classification symbols)
C08K3/00-13/08, C08L1/00-101/14, C08G69/00-69/50

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A<br>Y | WO 2010/047315 A1 (Ube Industries, Ltd.),<br>29 April 2010 (29.04.2010),<br>claims 1, 6; paragraphs [0073] to [0075]<br>& TW 201030098 A | 1-15<br>16-30<br>1-30 |
| Y | JP 2006-028314 A (Daicel-Degussa Ltd.),<br>02 February 2006 (02.02.2006),<br>claim 3; paragraphs [0044] to [0045], [0049], [0107], [0120]<br>(Family: none) | 1-30 |
| A | WO 2012/090797 A1 (Mitsubishi Gas Chemical Co., Inc.),<br>05 July 2012 (05.07.2012),<br>claim 1; paragraphs [0025] to [0026]<br>& AU 2011351048 A & TW 201231554 A | 1-30 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 September, 2013 (26.09.13) | 08 October, 2013 (08.10.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/071837

C (Continuation). DOCUMENTS CONSIDERED TO BE RELEVANT

| Category* | Citation of document, with indication, where appropriate, of the relevant passages | Relevant to claim No. |
|---|---|---|
| E,A | WO 2013/133145 A1 (Toyobo Co., Ltd.), 12 September 2013 (12.09.2013), claims; examples (Family: none) | 1-30 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 51063860 A
- US 2941956 A
- JP 47033279 B


### Non-patent literature cited in the description


- *J. Org. Chem.,* 1963, vol. 28, 2069-2075
- *Chemical Review,* 1981, vol. 81 (4), 619-621